# FASCICULE DE BREVET EUROPEEN

(11) **EP 3 245 416 B1**
(45) Date de publication et mention de la délivrance du brevet: **05.12.2018**
(21) Numéro de dépôt: 16702756.4
(22) Date de dépôt: 15.01.2016
(51) Int. Cl.: F16D 13/75

(54) **MÉCANISME DE RATTRAPAGE D'USURE POUR UN DISPOSITIF D'EMBRAYAGE, NOTAMMENT POUR VÉHICULE AUTOMOBILE**
VERSCHLEISSEINSTELLUNGSMECHANISMUS FÜR EINE KUPPLUNGSVORRICHTUNG, INSBESONDERE FÜR KRAFTFAHRZEUGE
WEAR ADJUSTMENT MECHANISM FOR A CLUTCH DEVICE, PARTICULARLY FOR MOTOR VEHICLE

(30) Priorité: 15.01.2015 FR 1550320
(43) Date de publication de la demande: 22.11.2017
(73) Titulaire: Valeo Embrayages, 80009 Amiens Cedex 2 (FR)
(72) Inventeur: LEBAS, Gilles, 80009 Amiens (FR); MAUREL, Hervé, 80009 Amiens (FR); DEQUESNES, Laurent, 80009 Amiens (FR); COMMEINE, Emmanuel, 80009 Amiens (FR)
(74) Mandataire: Cardon, Nicolas
(86) Numéro de dépôt international: PCT/FR2016/050076
(87) Numéro de publication internationale: WO 2016/113514

(56) Documents cités:
- EP-A1- 2 772 658
- DE-A1- 4 412 107
- FR-A1- 2 994 238

## Description

La présente invention concerne un mécanisme de rattrapage d'usure pour un dispositif d'embrayage, notamment pour véhicule automobile, ainsi qu'un tel dispositif d'embrayage.

Un dispositif d'embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Un dispositif d'embrayage à rattrapage d'usure est connu du document FR 2 780 119. Ce dispositif comporte un couvercle à l'intérieur duquel est monté un plateau de pression destiné à venir en appui sur un disque de friction, un diaphragme intercalé entre le couvercle et le plateau de pression, servant à l'actionnement du plateau de pression entre une position totalement embrayée dans laquelle le dit plateau de pression est poussé contre le disque de friction, et une position totalement débrayée dans laquelle ledit plateau de pression est écarté du disque de friction par l'intermédiaire de moyens de rappel du plateau de pression.

Des moyens de rattrapage de l'usure du disque de friction sont intercalés entre le diaphragme et le plateau de pression, et comprennent au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position angulaire de la rampe par rapport à la contre-rampe.

Le dispositif comporte en outre des moyens de détection de l'usure aptes à autoriser le déplacement de l'organe mobile des moyens de rattrapage d'usure en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage et comportant une rampe coopérant avec une contre-rampe tournée du côté du plateau de pression.

Le dispositif comporte enfin un organe presseur venant contraindre les rampes desdits organes mobiles contre les contre-rampes associées, l'organe presseur étant apte à coopérer avec une butée fixe, de manière à libérer lesdits organes mobiles lorsqu'une usure du disque de friction est détectée.

L'organe de rattrapage mobile est sollicité à l'aide d'un ressort, de façon à rattraper le jeu entre celui-ci et l'organe presseur, lorsque ledit organe de rattrapage mobile est libéré par l'organe presseur et par le diaphragme. Par ailleurs, l'organe de détection mobile est sollicité par un autre ressort de façon à rattraper le jeu entre celui-ci et l'organe presseur, lorsque ledit organe de détection mobile est libéré par l'organe presseur et par le diaphragme.

En fonctionnement, l'ensemble est soumis, de façon alternée, à des phases successives d'embrayage et de débrayage.

En phase d'embrayage, le diaphragme appuie sur le plateau de pression, par l'intermédiaire de l'organe de rattrapage de jeu. En phase de débrayage, le plateau de pression est rappelé vers sa position de débrayage, par l'intermédiaire de moyens de rappel prenant généralement la forme de languettes élastiquement déformables.

Lorsque le disque de friction n'est pas usé et que les contre-matériaux des plateaux de pression et de réaction ne sont pas usés, l'organe presseur maintient constamment l'organe de détection et l'organe de rattrapage en appui sur le disque de pression : lesdits organes sont immobilisés.

En cas d'usure, l'organe presseur vient en appui sur la butée et un jeu se crée entre l'organe presseur et l'organe de détection. Comme ce dernier est contraint par un ressort, il est déplacé de façon à combler le jeu précité. En position embrayée, l'effort appliqué par le diaphragme sur l'organe de rattrapage empêche le déplacement de ce dernier, par appui et frottement sur le plateau de pression. Ensuite, lorsque le diaphragme est déplacé dans sa position débrayée, les languettes de rappel du plateau de pression tendent à plaquer le plateau de pression contre l'organe de rattrapage de jeu, et l'organe de rattrapage de jeu contre le diaphragme. L'effort exercé par les languettes de rappel est relativement faible de façon à autoriser, malgré les frottements en jeu, un déplacement de l'organe de rattrapage de jeu, sous l'effet de la contrainte appliquée par le ressort correspondant. Ce déplacement permet de rattraper le jeu entre l'organe presseur et l'organe de rattrapage. On rattrape ainsi l'usure du plateau de friction ainsi que l'usure des contre-matériaux des plateaux de pression et de réaction associés.

Un tel fonctionnement nécessite notamment l'utilisation de moyens de rappel du plateau de pression exerçant des efforts relativement faibles, pour permettre le déplacement de l'organe de rattrapage malgré les frottements en jeu. Ceci nuit au fonctionnement car de tels moyens de rappel peuvent transmettre des vibrations axiales et générer des phénomènes de pompage du plateau de pression.

Afin de remédier à cet inconvénient, la demande de brevet FR 13/57891, au nom de la Demanderesse et non encore publiée, propose un dispositif d'embrayage à rattrapage d'usure, notamment pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression, caractérisé en ce qu'il comporte un mécanisme de rattrapage d'usure du type précité, ledit mécanisme comportant
des moyens de rattrapage de l'usure du disque de friction étant intercalés entre le diaphragme et le plateau de pression, lesdits moyens de rattrapage d'usure comportant au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe,
des moyens de détection de l'usure aptes à autoriser le déplacement dudit organe mobile des moyens de rattrapage d'usure en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du plateau de pression,
au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée,
l'organe de rattrapage mobile étant sollicité de façon à se déplacer lorsque ledit organe de rattrapage mobile est libéré par le diaphragme,
l'organe de détection mobile étant sollicité de façon à se déplacer et rattraper, au moins en partie, le jeu entre celui-ci et l'organe presseur, lorsque ledit organe de détection mobile est libéré par l'organe presseur et par le diaphragme.

De plus, le diaphragme libère l'organe de détection mobile et empêche le déplacement de l'organe de rattrapage mobile, en position complètement embrayée, et le diaphragme libère l'organe de rattrapage mobile et empêche le déplacement de l'organe de détection mobile, en position complètement débrayée, le diaphragme venant toujours en appui sur l'un au moins desdits organes mobiles entre ses positions totalement embrayée et totalement débrayée.

De cette manière, les moyens de rappel du plateau de pression peuvent exercer un effort important, cet effort étant repris par l'organe de rattrapage mobile puis par le diaphragme, ou par l'organe de détection mobile puis par le diaphragme, en fonction de la position du diaphragme. En effet, lors de leurs déplacements, lesdits organes mobiles ne sont pas soumis à l'effort exercé par les moyens de rappel du plateau de pression et il est donc possible de solliciter aisément leur déplacement, en cas d'usure.

Comme indiqué précédemment, le fait de disposer de moyens de rappel du plateau de pression exerçant un effort important, tels par exemple que des languettes ressorts ayant une forte raideur, permet de limiter la transmission des vibrations axiales et d'éviter les phénomènes de pompage du plateau de pression.

L'organe de détection mobile et l'organe de rattrapage mobile sont sollicités par des organes élastiques, par exemple des ressorts de traction.

En particulier, au moins un premier ressort de traction s'étendant circonférentiellement est monté entre l'organe de détection et le plateau de pression, ou entre l'organe de détection et un couvercle couplé en rotation au plateau de pression. Des seconds ressorts de traction s'étendant circonférentiellement sont montés entre l'organe de détection et l'organe de rattrapage. Ces seconds ressorts assurent la fonction de motorisation de l'organe de rattrapage par rapport à l'organe de détection.

On notera que la longueur du premier ressort est supérieure à celle des seconds ressorts, de façon à pouvoir solliciter le déplacement de l'organe de détection sur une grande plage angulaire (par exemple de l'ordre de 120°).

L'organe de détection et l'organe de rattrapage mobiles sont concentriques et séparés radialement l'un de l'autre par des plots de centrage ou d'écartement fixes, formés par exemple dans le plateau de pression.

En fonctionnement, les plots frottent lors de la rotation desdits organes mobiles, ce qui peut perturber le fonctionnement des moyens de rattrapage d'usure et contraindre à surdimensionner le premier ressort.

Par ailleurs, de tels plots de centrage ne permettent pas d'assurer un centrage précis et fiable de l'organe de détection et de l'organe de rattrapage.

Enfin, de tels plots doivent être usinés, ce qui est couteux. L'usinage des plots n'est pas non plus favorable pour la qualité du centrage. Un jeu important doit être défini entre les plots, d'une part, et l'organe de détection et/ou l'organe de rattrapage, d'autre part, en raison de la dilatation thermique du plateau de pression.

L'invention a notamment pour but d'apporter une solution simple, efficace et économique à ces problèmes.

A cet effet, l'invention concerne un mécanisme de rattrapage d'usure pour un dispositif d'embrayage, notamment pour véhicule automobile, comportant un organe de rattrapage d'usure comprenant une première rampe destinée à coopérer avec une première contre-rampe, un organe de détection d'usure comprenant une seconde rampe destinée à coopérer avec une seconde contre-rampe, l'organe de rattrapage d'usure étant mobile par rapport à l'organe de détection, caractérisé en ce qu'il comporte des moyens de centrage de l'organe de rattrapage d'usure par rapport à l'organe de détection d'usure, montés sur l'organe de rattrapage d'usure et/ou sur l'organe de détection, et mobiles avec l'organe sur lequel les moyens de centrage sont montés.

Les moyens de centrage étant mobiles, ils ne génèrent pas ou peu de frottements avec l'organe de détection et avec l'organe de rattrapage mobiles, améliorant ainsi le fonctionnement d'un tel mécanisme de rattrapage d'usure.

Selon une forme de réalisation de l'invention, les moyens de centrage peuvent comporter une première partie d'appui venant en appui sur l'organe de détection, respectivement sur l'organe de rattrapage, et une seconde partie d'appui venant en appui sur l'organe de rattrapage, respectivement sur l'organe de détection, les moyens de centrage tendant à rapprocher élastiquement les première et seconde parties d'appui de façon à pincer l'organe de rattrapage d'usure et l'organe de détection entre lesdites parties.

En particulier, si l'organe de rattrapage et l'organe de détection sont annulaires et concentriques par exemple, la première partie d'appui peut être située radialement à l'intérieur de l'organe le plus interne et la seconde partie d'appui peut être située radialement à l'extérieur de l'organe le plus externe, ou inversement. L'organe le plus interne peut être l'organe de rattrapage ou l'organe de détection, l'organe le plus externe étant alors l'organe de détection, respectivement l'organe de rattrapage.

Selon une autre forme de réalisation de l'invention, les moyens de centrage comportent une partie d'entretoisement intercalée entre l'organe de rattrapage et l'organe de détection.

De préférence, les moyens de centrage comportent au moins un organe élastique monté entre l'organe de rattrapage et l'organe de détection d'usure.

Dans ce cas, l'organe de rattrapage et l'organe de détection sont annulaires et concentriques, les moyens de centrage comportant au moins trois organes élastiques répartis sur la circonférence desdits organes.

Les organes élastiques sont régulièrement répartis sur la circonférence de l'organe de rattrapage et de l'organe de détection. En d'autres termes, si le mécanisme de rattrapage d'usure comporte trois organes élastiques, ceux-ci sont décalés angulairement de 120°.

L'organe élastique peut comporter au moins deux bras reliés l'un à l'autre par des moyens élastiques tendant à écarter les deux bras l'un par rapport à l'autre, chaque bras étant apte à coopérer avec l'organe de rattrapage d'usure et/ou l'organe de détection de manière à déplacer l'organe de rattrapage d'usure par rapport à l'organe de détection, par rapprochement et écartement successifs des deux bras.

Un tel organe élastique tend à écarter ses deux bras, à l'inverse du ressort de traction utilisé dans l'art antérieur qui tend à rapprocher ses deux extrémités. Un tel organe élastique est relativement facile à monter et permet de motoriser, c'est-à-dire de déplacer, l'organe de rattrapage d'usure par rapport à l'organe de détection. Un tel mécanisme de rattrapage d'usure peut former un sous-ensemble pré-monté, apte à être monté ensuite dans un dispositif d'embrayage, par exemple de type double-embrayage.

Selon une caractéristique de l'invention, les moyens élastiques sont conçus pour déplacer les deux bras l'un par rapport à l'autre par translation, dans la direction d'écartement ou de rapprochement des bras.

Selon une forme de réalisation de l'invention, les moyens élastiques comportent une portion courbe ou au moins une spire.

Dans ce cas, l'organe de rattrapage d'usure et l'organe de détection peuvent être annulaires ou en forme d'arc de cercle, et concentriques, lesdits organes étant aptes à pivoter l'un par rapport à l'autre autour d'un axe de pivotement, la portion courbe ou la spire des moyens élastiques s'étendant dans un plan radial ou dans un plan axial par rapport à l'axe de pivotement.

La portion courbe ou la spire des moyens élastiques peut alors être apte à prendre appui radialement sur l'organe de détection, respectivement sur l'organe de rattrapage d'usure, l'extrémité libre de l'un au moins des bras étant apte à prendre appui élastiquement et radialement sur l'organe de rattrapage d'usure, respectivement sur l'organe de détection, de façon à pincer et rapprocher radialement l'organe de rattrapage d'usure et l'organe de détection.

En variante, la portion courbe, la spire ou l'un au moins des bras est intercalé radialement entre l'organe de rattrapage de jeu et l'organe de détection.

Chaque bras peut être engagé dans une lumière de l'organe de détection et dans une lumière de l'organe rattrapage d'usure, chaque lumière comportant une portion d'introduction s'étendant perpendiculairement à la direction d'écartement des deux bras et débouchant au niveau d'une extrémité axiale de l'organe correspondant, et une portion de butée s'étendant dans la direction d'écartement des deux bras, chaque bras étant apte à venir en appui sur au moins une extrémité de la portion de butée de la lumière de l'organe de rattrapage d'usure et/ou de la lumière de l'organe de détection.L'invention concerne également un dispositif d'embrayage, notamment pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression, caractérisé en ce qu'il comporte un mécanisme de rattrapage d'usure du type précité, ledit mécanisme comportant des moyens de rattrapage de l'usure du disque de friction, intercalés entre le diaphragme et le plateau de pression, lesdits moyens de rattrapage d'usure comportant l'organe de rattrapage, mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe, des moyens de détection de l'usure aptes à autoriser le déplacement dudit organe mobile des moyens de rattrapage d'usure en cas d'usure du disque de friction et aptes à empêcher un tel déplacement lorsque cette usure n'est pas suffisante, lesdits moyens de détection comportant l'organe de détection, mobile dans une plage déterminée par rapport à l'organe de rattrapage mobile, et comportant une rampe coopérant avec une contre-rampe tournée du côté du plateau de pression, au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée, l'organe de rattrapage mobile étant sollicité de façon à se déplacer lorsque ledit organe de rattrapage mobile est libéré par le diaphragme, l'organe de détection mobile étant sollicité de façon à se déplacer et à rattraper, au moins en partie, le jeu entre celui-ci et l'organe presseur, lorsque ledit organe de détection mobile est libéré par l'organe presseur et par le diaphragme.

Chaque lumière servant à l'engagement d'un bras d'un organe élastique peut déboucher du côté du plateau de pression, par exemple en regard de la contre-rampe.

En variante, chaque lumière servant à l'engagement d'un bras d'un organe élastique peut déboucher du côté du diaphragme.

Dans les deux cas, l'extrémité débouchante de chaque lumière est fermée, la fermeture étant assurée par la surface correspondante de la contre-rampe ou par la surface correspondante du diaphragme.

De plus, le diaphragme peut libérer l'organe de détection mobile et empêcher le déplacement de l'organe de rattrapage mobile, en position complètement embrayée, le diaphragme libérant l'organe de rattrapage mobile et empêchant le déplacement de l'organe de détection mobile, en position complètement débrayée, le diaphragme venant toujours en appui sur l'un au moins desdits organes mobiles entre ses positions totalement embrayée et totalement débrayée.

Par ailleurs, l'organe de détection mobile peut se présenter sous la forme d'un anneau comportant une extrémité apte à venir en appui sur l'organe presseur et sur le diaphragme, et une extrémité comportant au moins une rampe s'étendant circonférentiellement, coopérant avec la contre-rampe associée tournée du côté du plateau de pression.

L'organe de rattrapage mobile peut se présenter sous la forme d'un anneau comportant une extrémité apte à venir en appui sur l'organe presseur et sur le diaphragme, et une extrémité comportant au moins une rampe s'étendant circonférentiellement, coopérant avec la contre-rampe associée tournée du côté du plateau de pression.

Le plateau de pression peut être annulaire, l'organe de détection mobile et l'organe de rattrapage mobile peuvent être centrés par rapport à l'axe de révolution du plateau de pression.

Le dispositif d'embrayage peut comporter un couvercle à l'intérieur duquel sont montés, au moins en partie, le plateau de pression et le diaphragme, le diaphragme étant intercalé entre le couvercle et le plateau de pression.

L'invention concerne également un double embrayage, caractérisé en ce qu'il comporte au moins un dispositif d'embrayage du type précité.

Un double embrayage permet notamment de coupler alternativement l'arbre du moteur du véhicule avec deux arbres coaxiaux d'entrée d'une boîte de vitesses, qui peut être du type robotisée.

Ainsi, un double embrayage permet de changer de rapport de vitesses tout en maintenant la transmission d'un couple moteur aux roues du véhicule. En effet, les deux embrayages sont associés respectivement à des rapports de vitesses pairs et impairs. Lors d'un changement de rapport de vitesses, un premier embrayage est débrayé alors que le second embrayage est embrayé, si bien que le couple moteur est transféré progressivement du premier au second embrayage.

Chaque embrayage comprend un mécanisme comportant un diaphragme destiné à coopérer avec un plateau de pression solidaire en rotation du couvercle et de l'arbre du moteur. Chaque diaphragme est déplaçable au moyen d'une butée d'embrayage correspondante, entre une position de repos et une position active. Selon le type d'embrayage, la position active du diaphragme correspond à un couplage ou à un découplage des arbres du moteur et de la boîte de vitesses et la position de repos du diaphragme correspond à un découplage ou un couplage de ces arbres. On parle alors respectivement d'embrayage normalement ouvert et d'embrayage normalement fermé.

Pour des raisons de sécurité, l'un au moins des embrayages est du type normalement ouvert.

La butée d'embrayage est commandée par un actionneur piloté par un calculateur électronique afin d'exercer une force prédéterminée sur le diaphragme et de le déplacer sur une distance donnée.

Le plateau de pression de chaque embrayage, sollicité par le diaphragme correspondant, est destiné à serrer un disque de friction sur un plateau de réaction correspondant. Un plateau de réaction peut être prévu pour chaque embrayage. En variante, on utilise un seul plateau de réaction commun aux deux embrayages, monté entre les deux disques de friction.

Chaque disque de friction est lié en rotation à un arbre d'entrée de la boîte de vitesses et chaque plateau de réaction est par exemple solidaire en rotation d'un volant lié à l'arbre moteur. Ainsi, le serrage d'un disque de friction entre les plateaux de pression et de réaction correspondants permet la transmission d'un couple entre l'arbre moteur et l'arbre de la boîte de vitesses associés.

Comme précédemment, l'utilisation des embrayages provoque une usure des garnitures de friction des disques de friction ainsi que des contre-matériaux des plateaux de pression et de réaction associés. Ceci se traduit par une variation de la position de chaque plateau de pression par rapport au diaphragme associé et/ou au plateau de réaction, générant une variation de l'effort de serrage du disque de friction et une modification du point de léchage et de la course à la butée d'embrayage. Dans ce cas, le point de léchage est la position à partir de laquelle une partie du couple du moteur est transmis à l'arbre de la boîte de vitesses lors de la fermeture de l'embrayage.

De manière générale, une telle usure est plus présente au niveau du disque de friction et des plateaux de pression et de réaction appartenant au premier embrayage, c'est-à-dire à l'embrayage associé aux rapports de vitesses impairs. Ainsi, lorsque le double embrayage ne comporte qu'un seul mécanisme de rattrapage d'usure selon l'invention, celui-ci forme de préférence une partie du premier embrayage. Bien entendu, le double embrayage selon l'invention peut comporter à la fois un mécanisme équipant le premier embrayage et un mécanisme équipant le second embrayage.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 à 13 illustrent un dispositif d'embrayage selon une première forme de réalisation, en particulier
- la figure 1 est une vue en perspective et en coupe partielle du dispositif,
- la figure 2 est une demi-vue en coupe axiale du dispositif,
- la figure 3 est une vue en perspective et en coupe partielle d'une partie du dispositif,
- la figure 4 est une vue de face et en coupe partielle d'une partie du dispositif,
- les figures 5 et 6 sont des vues de face d'une partie du dispositif,
- la figure 7 est une vue en perspective d'une partie du dispositif,
- la figure 8 est une vue en perspective d'un organe élastique du dispositif,
- les figures 9 et 10 sont des vues en perspective illustrant le montage de l'organe élastique de la figure 8,
- la figure 11 est une vue illustrant schématiquement le fonctionnement du dispositif d'embrayage, lorsque le plateau de pression, le plateau de réaction et le disque de friction ne sont pas usés, en position embrayée du dispositif d'embrayage,
- la figure 12 est une vue illustrant schématiquement une première étape de fonctionnement du dispositif d'embrayage, en cas d'usure de l'un au moins des éléments précités, en position embrayée du dispositif d'embrayage,
- la figure 13 est une vue illustrant la position des moyens de butée de l'organe de rattrapage mobile par rapport à l'organe détection mobile, dans la première étape de fonctionnement,
- les figures 14 et 15 sont des vues correspondant respectivement aux figures 12 et 13 et illustrant une deuxième étape de fonctionnement,
- la figure 16 est une vue correspondant à la figure 12 et illustrant une troisième étape de fonctionnement,
- la figure 17 est une vue correspondant à la figure 12 et illustrant une quatrième étape de fonctionnement,
- les figures 18 et 19 sont des vues correspondant respectivement aux figures 12 et 13 et illustrant une cinquième étape de fonctionnement,
- la figure 20 est une vue schématique illustrant une variante de réalisation de l'invention,
- la figure 21 est une vue correspondant à la figure 8 et illustrant une deuxième forme de réalisation de l'invention,
- la figure 22 est une vue en perspective d'un organe élastique d'un dispositif selon une troisième forme de réalisation de l'invention,
- la figure 23 est une vue de face illustrant le montage de l'organe élastique de la figure 22,
- les figures 24 et 25 sont des vues correspondant respectivement aux figures 22 et 23, illustrant une quatrième forme de réalisation de l'invention,
- les figures 26 et 27 sont des vues correspondant respectivement aux figures 22 et 23, illustrant une cinquième forme de réalisation de l'invention,
- les figures 28, 29 et 30 sont des vues correspondant à la figure 22, illustrant respectivement une sixième, une septième et une huitième forme de réalisation de l'invention,
- la figure 31 est une demi-vue schématique en coupe axiale, illustrant un dispositif selon une neuvième forme de réalisation de l'invention,
- la figure 32 est une vue de détail, en perspective, d'un dispositif selon une dixième forme de réalisation de l'invention,
- la figure 33 est une vue correspondant à la figure 32, dans laquelle le diaphragme a été retiré,
- la figure 34 est une vue de détail, de côté, d'un dispositif selon une onzième forme de réalisation de l'invention,
- la figure 35 est une vue de détail, en perspective, du dispositif de la figure 34.

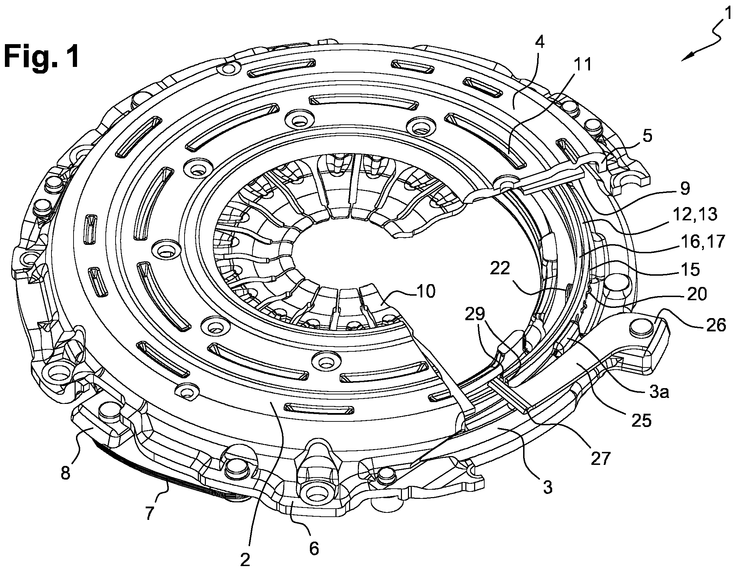

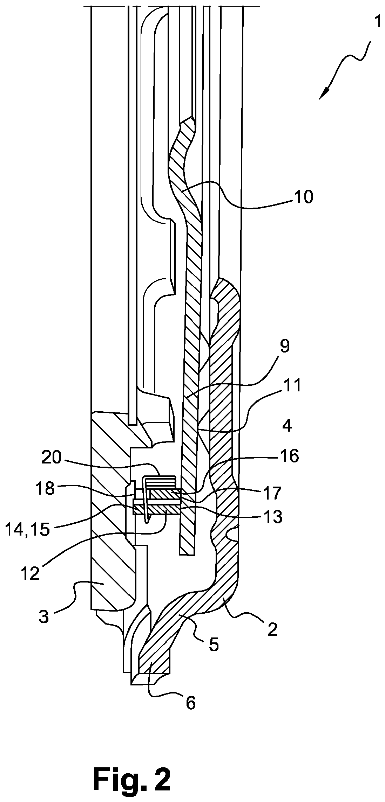

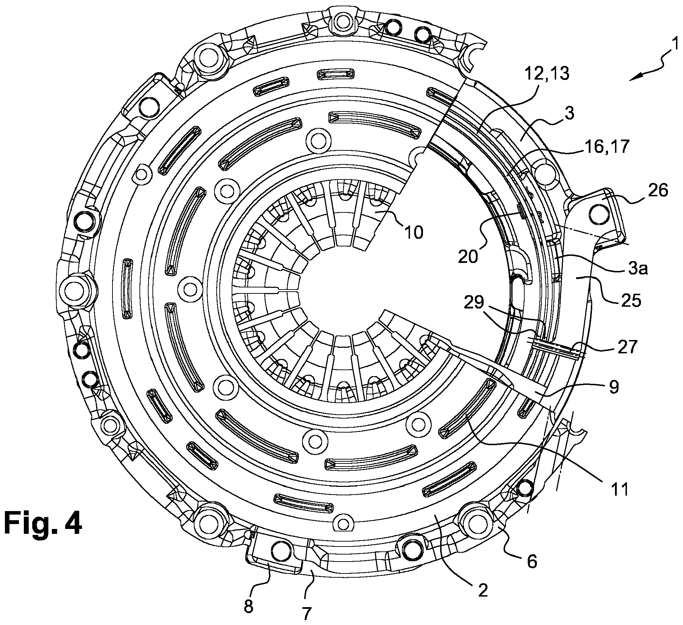

Un dispositif d'embrayage 1, notamment pour véhicule automobile, selon une première forme de réalisation de l'invention est illustré aux figures 1 à 4, et comporte un couvercle 2 en forme de cloche, d'axe A, à l'intérieur duquel est monté un plateau de pression 3 destiné à venir en appui sur un disque de friction du dispositif d'embrayage.

Le couvercle 2 comporte une partie annulaire 4 s'étendant radialement, une partie périphérique radialement externe 5, s'étendant vers l'arrière, comportant des pattes 6 dont certaines permettent la fixation du couvercle 2 à un organe axialement fixe du dispositif d'embrayage et dont d'autres permettent la fixation de languettes élastiques 7.

Plus particulièrement, plusieurs groupes de languettes 7 empilées les unes sur les autres peuvent être fixés entre le couvercle 2 et le plateau de pression 3. Chaque languette 7 d'un même groupe est alors fixée à des pattes 6 du couvercle 2, à une première extrémité, et à des pattes 8 du plateau de pression 3, à une seconde extrémité. Cette fixation est assurée par l'intermédiaire de rivets.

De cette manière, le plateau de pression 3 est soumis à un effort de rappel important, compris par exemple entre 0 et 600 N, (dans le cas d'un véhicule de tourisme) ou compris entre 0 et 2000 N (dans le cas d'un véhicule industriel), dirigé axialement vers l'avant. Le plateau de pression 3 est ainsi rappelé vers une position dite de débrayage, dans laquelle il est écarté du disque de friction.

Un diaphragme 9 est intercalé axialement entre le couvercle 2 et le plateau de pression 3 et sert à l'actionnement du plateau de pression 3 entre une position totalement embrayée dans laquelle ledit plateau de pression 3 est poussé contre le disque de friction, et une position totalement débrayée dans laquelle ledit plateau de pression 3 est écarté du disque de friction par l'intermédiaire des languettes élastiques 7.

Le diaphragme 9 est annulaire et comporte, à sa périphérie radialement interne, des doigts 10 s'étendant radialement vers l'intérieur. Ces doigts 10 sont destinés à coopérer avec une butée d'embrayage, comme cela est bien connu en soi.

Le diaphragme 9 prend en outre appui sur des zones 11 en saillie du couvercle, de manière à ce qu'il se déforme et pivote autour desdites zones 11, en fonctionnement.

Des moyens de rattrapage d'usure et de détection sont intercalés axialement entre le plateau de pression et le diaphragme. Plus particulièrement, le diaphragme 9 vient coopérer avec lesdits moyens de rattrapage d'usure et de détection dans une zone située radialement à l'extérieur des zones d'appui 11 du couvercle 2.

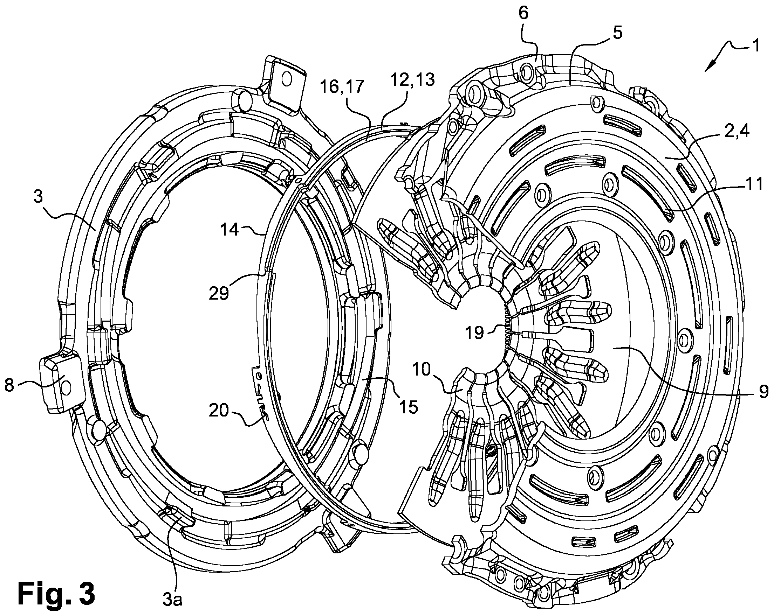

Ces moyens comportent un organe de rattrapage mobile 12 se présentant sous la forme d'un anneau comportant une extrémité 13 (figure 3) contre laquelle le diaphragme 9 est apte à venir en appui, et une extrémité comportant au moins une rampe 14 s'étendant circonférentiellement, coopérant avec une contre-rampe associée 15 ménagée directement sur le plateau de pression 3.

Les moyens précités comportent également un organe de détection 16 mobile se présentant sous la forme d'un anneau comportant une extrémité 17 contre laquelle le diaphragme est apte à venir en appui, et une extrémité comportant au moins une rampe 18 s'étendant circonférentiellement, coopérant avec la contre-rampe 15 du plateau de pression 3.

A titre d'exemple, l'angle des rampes 14, 18 desdits organes mobiles 12, 16 et de la contre-rampe 15 du plateau de pression 3 est compris entre 2 et 12°.

Les deux organes mobiles 12, 16 sont concentriques. Dans la forme de réalisation représentée aux figures, l'organe de détection mobile 16 est situé radialement à l'intérieur de l'organe de rattrapage mobile 12. En variante, les positions respectives desdits organes mobiles 12, 16 peuvent être inversées.

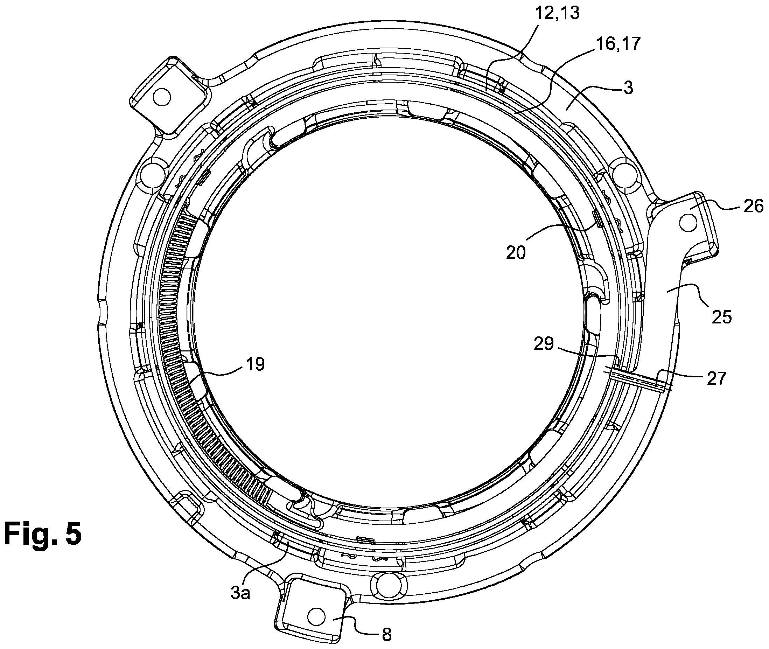

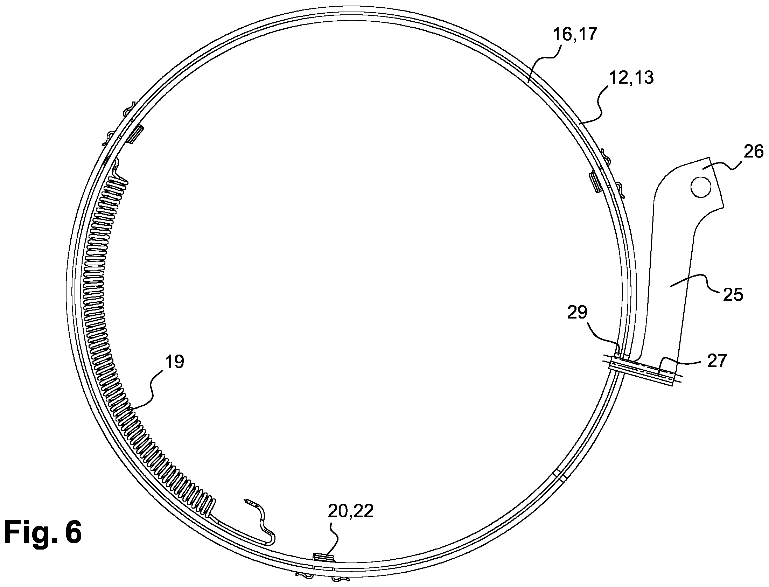

Un premier organe élastique se présentant sous la forme d'un ressort de traction 19 (figures 5 et 6) s'étendant circonférentiellement est monté entre l'organe de détection 16 et le couvercle 2 ou le plateau de pression 3. On rappelle que le plateau de pression 3 est couplé en rotation au couvercle 2, par l'intermédiaire des languettes élastiques 7. La longueur du ressort 19 est dimensionnée de façon à pouvoir solliciter le déplacement de l'organe de détection 16 sur une grande plage angulaire (par exemple de l'ordre de 120°).

Des seconds organes élastiques 20 sont montés chacun entre l'organe de détection 16 et l'organe de rattrapage 12.

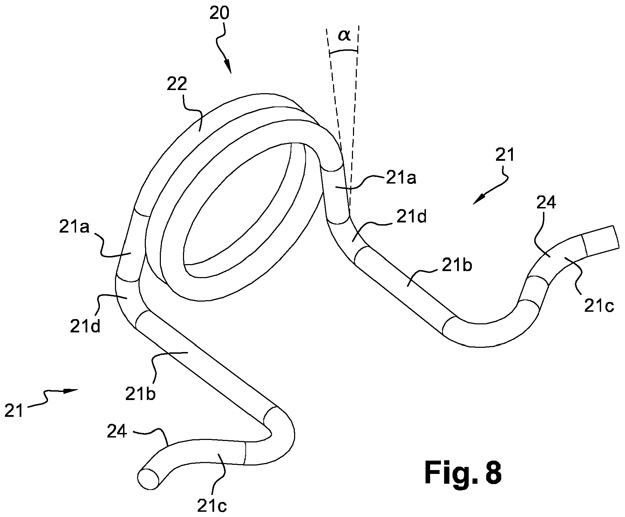

Les seconds organes élastiques 20 sont par exemple au nombre de trois et sont régulièrement répartis sur toute la périphérie. Comme cela est mieux visible à la figure 8, chaque second organe élastique 20 est formé d'un fil de section ronde et comporte deux bras 21 reliés l'un à l'autre par des moyens élastiques tendant à écarter les deux bras l'un par rapport à l'autre. Chaque organe élastique 20 est réalisé à partir de fil d'acier, de type acier à ressort. La section du fil peut également être carrée, de façon à augmenter la surface d'appui afin de réduire l'usure des surfaces en contact avec les organes mobiles.

Les moyens élastiques comportent des spires 22, ici 2,5 spires, les spires 22 s'étendant globalement dans un plan parallèle à l'axe des organes de rattrapage et de détection 12, 16. Les spires 22 tendent à écarter les bras l'un de l'autre, lorsqu'elles sont sollicitées.

Chaque bras 21 comporte une partie proximale 21a, reliée à l'une des extrémités des spires, une partie distale 21c, et une partie médiane 21b s'étendant entre les parties proximale et distale 21a, 21c. Les parties proximales 21a des deux bras 21 s'étendent chacune dans un plan radial en formant un angle α compris entre - 45° et 45° par rapport à l'axe A. Les parties proximales 21a s'écartent l'une de l'autre en direction du plateau de pression 3, c'est-à-dire vers le bas à la figure 8. Les parties médianes 21b sont parallèles l'une par rapport à l'autre et s'étendent dans un plan radial, globalement perpendiculaire au plan des spires 22 et des parties proximales 21a. Les parties médianes 21b sont reliées aux parties proximales 21a par des zones courbes 21d. Les parties distales 21c s'étendent dans un plan globalement radial depuis les parties médianes 21b, à l'opposé l'une de l'autre. Chaque partie distale 21c présente une forme générale en S.

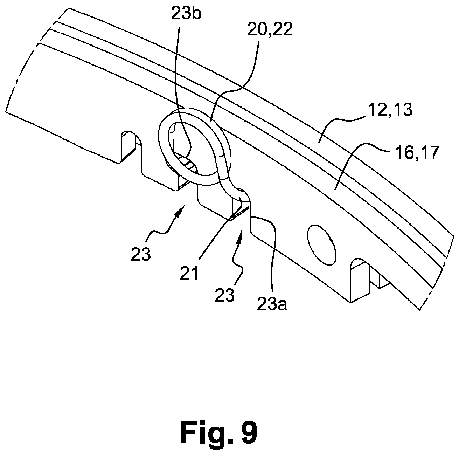

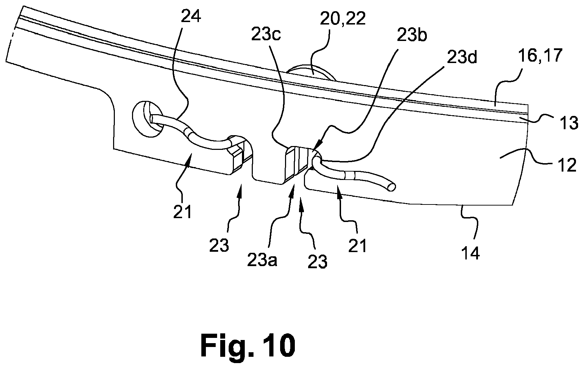

L'organe de rattrapage 12 et l'organe de détection 16 comportent chacun deux lumières 23 (figures 9, 10) associées à chaque second organe élastique 20. Dans le cas illustré aux figures, chaque organe 12, 16 comporte donc trois paires de lumières 23.

Chaque lumière 23 comporte une portion d'introduction 23a débouchant au niveau de l'extrémité de l'organe correspondant 12, 16 qui est tournée en direction du plateau de pression 3. La portion d'introduction 23a s'étend axialement. Chaque lumière 23 comporte en outre une portion de butée 23b s'étendant circonférentiellement depuis l'extrémité de la portion d'introduction 23a qui est opposée au plateau de pression 3. Les portions de butée 23b des deux lumières 23 d'une même paire s'étendent à l'opposé l'une de l'autre, depuis la portion d'introduction 23a correspondante. Chaque portion de butée 23b comporte une extrémité dite proximale 23c (figure 10), au niveau de laquelle la portion de butée 23b et la portion d'introduction 23a se rejoignent, et une extrémité opposée 23d dite distale. L'extrémité proximale 23c se présente sous la forme d'une surface plane s'étendant axialement, l'extrémité distale 23d se présentant sous la forme d'une surface hémicylindrique, par exemple, de diamètre égal ou supérieur au diamètre du fil du second organe élastique 20 correspondant.

Le montage d'un second organe élastique 20 s'effectue en rapprochant les deux bras 21 l'un de l'autre, en s'opposant à l'effort de rappel exercé par les spires 22 qui tend à écarter les deux bras 21 l'un de l'autre. On introduit ensuite les parties médianes 21b de chaque bras 21 par les extrémités débouchantes des portions d'introduction 23a des lumières correspondantes 23. Une fois que les parties médianes 21b sont situées au niveau des portions de butée 23b des lumières 23, les deux bras 21 peuvent être relâchés de façon à ce qu'ils s'écartent l'un de l'autre, sous l'effet de l'effort de rappel exercé par les spires 22. Les portions médianes 21b des bras 21 viennent alors en appui sur les extrémités distales 23d des portions de butée 23b des lumières 23.

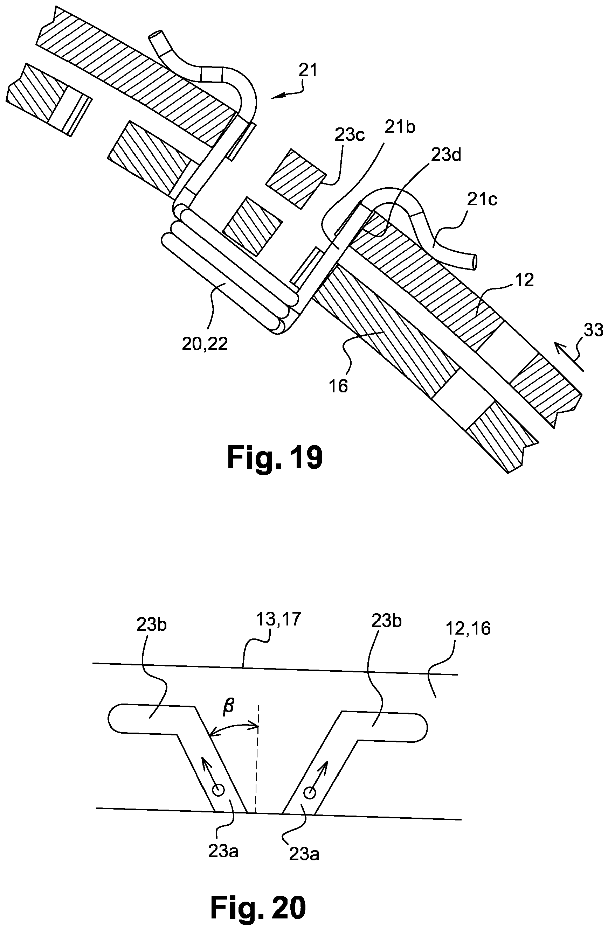

Selon une variante représentée à la figure 20, les portions d'introduction 23a des deux lumières 23 sont obliques par rapport à la direction axiale et s'écartent l'une de l'autre dans la direction d'introduction des bras (représentée par une flèche), c'est-à-dire dans la direction opposée au plateau de pression. L'angle d'inclinaison β des portions d'introduction 23a par rapport à la direction axiale est compris entre 15 ° et 45 °, par exemple. De cette manière, les portions d'introduction obliques 23a facilitent l'introduction des bras 21 qui, sous l'effet de l'effort de rappel élastique tendant à écarter les bras 21, ramènent les bras vers les portions de butée 23b, comme cela est illustré par les flèches.

Selon une variante non représentée, les portions d'introduction 23a des deux lumières 23 sont obliques et s'écartent l'une de l'autre dans la direction opposée à la direction d'introduction des bras.

Dans tous les cas, lorsque les portions médianes 21b des bras 21 viennent en appui sur les extrémités distales 23d des portions de butée 23b des lumières 23, la spire 22 radialement externe peut prendre appui sur la surface radialement interne de l'organe de détection 16 et les portions distales 21c peuvent prendre appui, au niveau de la zone convexe 24 (figures 8 et 10) de chaque portion distale 21c, sur la surface radialement externe de l'organe de rattrapage 12. Les portions distales 21 c exercent un effort de pincement tendant à rapprocher l'organe de rattrapage 12 de l'organe de détection 16. Les seconds organes élastiques 20 permettent ainsi le montage et le maintien en position d'un sous-ensemble formé au moins par l'organe de détection 16, l'organe de rattrapage 12 et les seconds organes élastiques 20. Par ailleurs, compte tenu de la forme en L des lumières 23, les seconds organes élastiques 20 sont montés de façon imperdable dans lesdites lumières 23. Enfin, les extrémités ouvertes des lumières 23 sont refermées par appui sur le plateau de pression 3, de sorte que, après montage des organes de rattrapage 12 et de détection 16 entre le diaphragme 9 et le plateau de pression 3, on évite tout retrait accidentel des bras 21 des seconds organes élastiques 20 hors des lumières correspondantes 23.

Compte tenu du nombre et du positionnement des seconds organes élastiques 20 (trois organes élastiques 20 décalés angulairement de 120°), ces derniers tendent ainsi à maintenir coaxiaux l'organe de rattrapage 12 et l'organe de détection 16. A cet effet également, les efforts de pincement exercés par les différents organes élastiques sont sensiblement identiques.

Compte tenu du diamètre de l'organe de détection 16 et de l'organe de rattrapage 12, un jeu radial existe entre ces deux organes 12, 16, de manière à éviter tout frottement entre eux en fonctionnement.

Le plateau de pression 3 comporte des plots 3a formant des moyens de centrage du sous-ensemble formé au moins par l'organe de détection 16, l'organe de rattrapage 12 et les seconds organes élastiques 20. En particulier, les plots 3a sont situées radialement à l'extérieur dudit sous-ensemble, c'est-à-dire radialement à l'extérieur de l'organe de rattrapage 12.

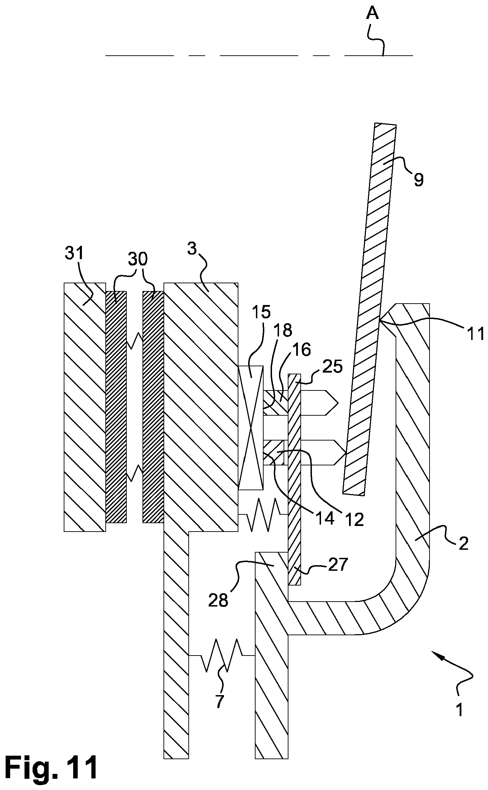

Le dispositif 1 comporte également un organe presseur 25 se présentant sous la forme d'une languette élastique exerçant un effort axial. Ladite languette est fixée par rivetage au plateau de pression 3, à une première extrémité 26, et vient en appui, à une seconde extrémité 27, sur l'extrémité correspondante 17 de l'organe de détection 16, de façon à le contraindre en appui sur le plateau de pression 3. Un jeu est formé axialement entre la seconde extrémité 27 de la languette 25 et l'organe de rattrapage 12, comme cela est mieux visible à la figure 11.

La seconde extrémité 27 de la languette 25 est apte à coopérer avec une butée fixe 28, ici une butée du couvercle 2, lorsque le déplacement du plateau de pression 3 est important, c'est-à-dire lorsqu'il existe une usure importante des garnitures du disque de friction et/ou des contre-matériaux des plateaux de pression et de réaction.

Comme cela est représenté à la figure 1 notamment, cette seconde extrémité 27 de la languette 25 forme également une butée angulaire, destinée à coopérer avec des surfaces radiales 29 des organes mobiles 12, 16, de manière à assurer le bon positionnement angulaire desdits organes mobiles 12, 16 avant montage de l'ensemble sur le dispositif d'embrayage. Cette butée angulaire n'intervient pas après montage. Cette butée peut toutefois être utilisée en tant que butée de fin de vie.

Comme cela est illustré schématiquement à la figure 11, les moyens de rattrapage et de détection d'usure sont inopérants lorsque les garnitures 30 du disque de friction 31 ne sont pas ou peu usées et que les contre-matériaux des plateaux de pression 3 et de réaction associés ne sont pas usés, par exemple lorsque l'usure axiale cumulée est inférieure à 0,05 mm.

En position totalement embrayée notamment, illustrée à la figure 11, le diaphragme 9 vient en appui sur l'organe de rattrapage 12, de façon à repousser le plateau de pression 3 à l'encontre des languettes élastiques de rappel 7. Le plateau de pression 3 et le plateau de réaction correspondant (axialement fixe) enserrent alors le disque de friction 31 portant les garnitures.

Dans cette position, la seconde extrémité 27 de la languette 25 affleure la butée 28 du couvercle 2. En d'autres termes, en l'absence d'usure prononcée, la languette 25 et/ou le diaphragme 9 maintiennent l'organe de détection 16 et l'organe de rattrapage 12 en appui sur le plateau de pression 3, quelle que soit la phase de fonctionnement du dispositif d'embrayage (embrayage/débrayage). Dans ce cas, le couple résistant généré par le frottement entre lesdits organes 12, 16 et le plateau de pression 3 est supérieur au couple exercé par les ressorts 19. Lesdits organes 12, 16 sont donc immobilisés en rotation par rapport au plateau de pression 3, quelle que soit la phase de fonctionnement du dispositif d'embrayage.

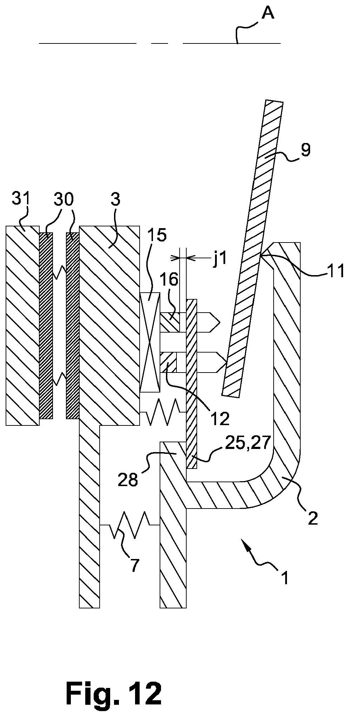

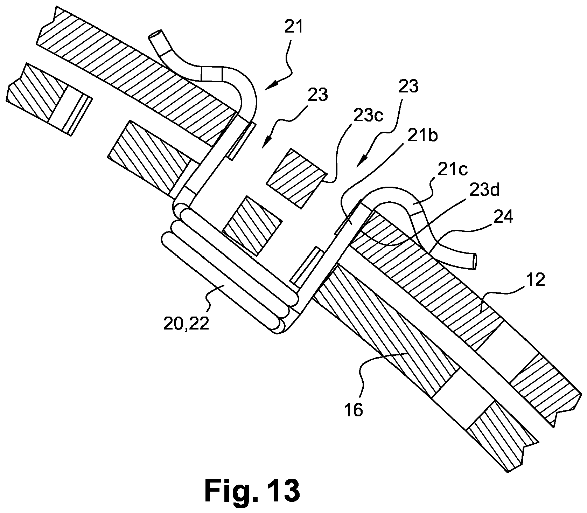

Les figures 12 à 19 illustrent le cas où les garnitures 30 du disque de friction 31 (ou encore les contre-matériaux des plateaux de pression 3 et de réaction) présentent une usure importante, qu'il est nécessaire de rattraper afin d'éviter un disfonctionnement du dispositif d'embrayage.

Dans ce cas, comme illustré à la figure 12, la seconde extrémité 27 de la languette 25 vient en appui sur la butée 28 du couvercle 2, en position complètement embrayée, et se décolle de l'extrémité correspondante de l'organe de détection 16. Un jeu j1 se forme donc entre ladite extrémité de l'organe de détection 16 et la seconde extrémité 27 de la languette 25.

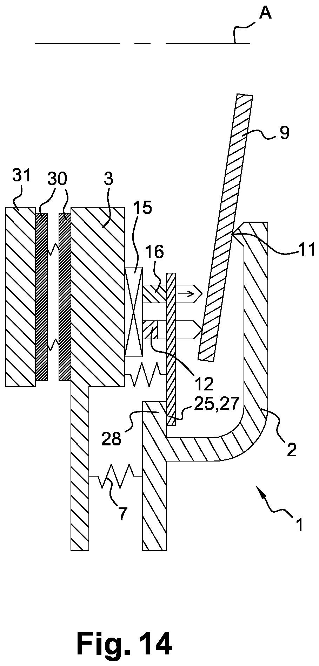

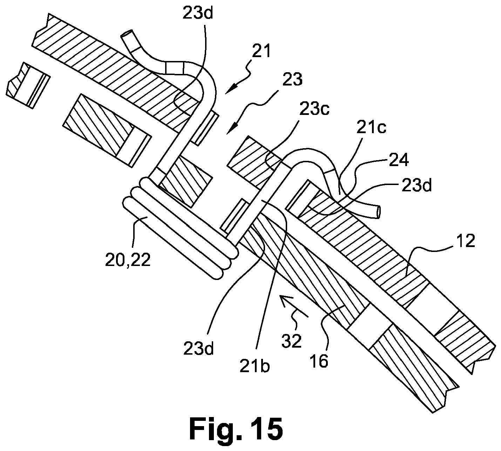

L'organe de détection 16, qui n'est alors plus soumis à un effort axial, est entraîné en rotation par le premier organe élastique 19, dans le sens représenté par la flèche 32 à la figure 15, de façon à combler au moins partiellement le jeu j1 (figure 14). Lors de la rotation de l'organe de détection 16, la portion médiane 21b de l'un des bras 21 est en appui sur l'extrémité distale 23d de la portion de butée 23b d'une lumière 23 de l'organe de détection 16 (figure 15) et la portion médiane 21b de l'autre bras 21 est en appui sur l'extrémité distale 23d d'une lumière opposée de l'organe de rattrapage 12. Ainsi, lors d'une telle rotation, les deux bras 21 sont rapprochés l'un de l'autre, de manière à contraindre les spires 22.

La rotation de l'organe de détection 16 est stoppée lorsque l'extrémité correspondante de l'organe de détection 16 vient à nouveau en appui sur la seconde extrémité 27 de la languette 25 (faible jeu à rattraper) ou lorsque la portion médiane 21b du bras précité vient en appui sur l'extrémité proximale 23c de la lumière 23 de l'organe de rattrapage 12 (figure 15) ou lorsque le jeu J2 est comblé.

On notera que, durant cette phase, l'organe de rattrapage 12 est maintenu en appui sur le plateau de pression 3 par le diaphragme 9. Il est donc immobilisé en rotation par rapport au plateau de pression 3.

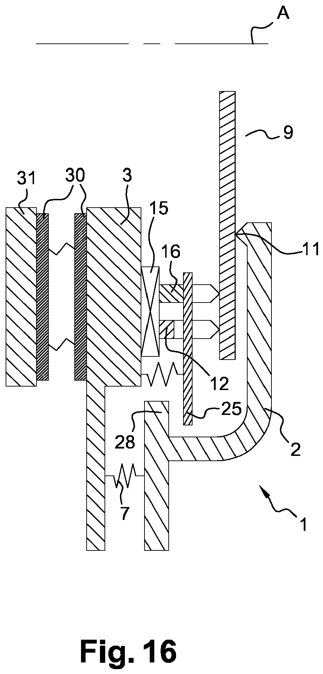

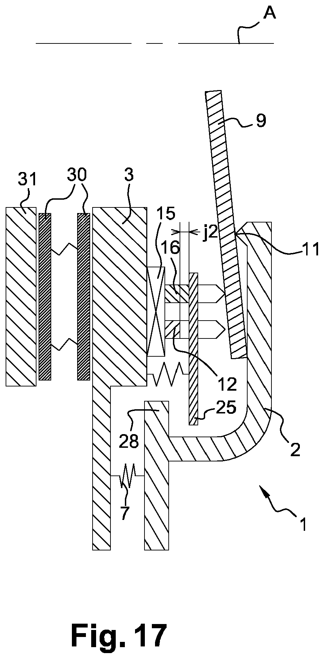

Lors de la phase de débrayage suivante, le diaphragme 9 transfère son appui de l'organe de rattrapage 12 vers l'organe de détection 16. Les figures 16 et 17 sont des vues illustrant les positions de ces éléments lors d'un tel transfert. Lors d'un tel débrayage, le plateau de pression 3 est écarté du plateau de réaction par l'intermédiaire des languettes de rappel 7 correspondantes, de manière à libérer le disque de friction 31.

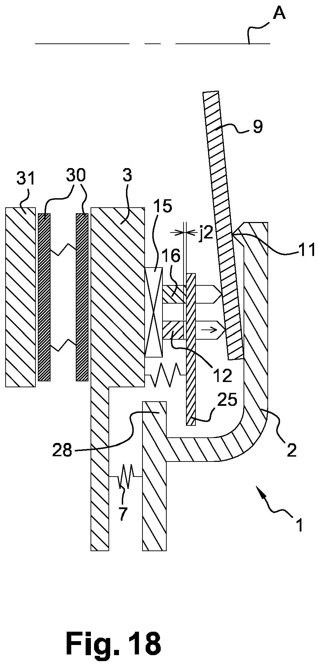

Comme illustré aux figures 18 et 19, lorsque le diaphragme 9 est en position totalement débrayée, il libère totalement l'organe de rattrapage 12. Dans cette position, l'organe de détection 16 est maintenu fixe en rotation par appui sur le diaphragme 9 et sur le plateau de pression 3, sous l'effet des languettes de rappel 7. Par ailleurs, la languette 25 est écartée de la butée 28 et de l'organe de rattrapage 12.

L'organe de rattrapage 12, contraint par les organes élastiques 20, est donc entraîné en rotation dans le sens de rotation indiqué par la flèche 33 à la figure 19 de manière à combler tout ou partie du jeu j2 entre ledit organe de rattrapage 12 et la languette 25 (figures 18 et 19).

Le pivotement de l'organe de rattrapage 12 et de l'organe de détection 16 par rapport au plateau de pression 3 permet, par l'intermédiaire des rampes 14, 18 et de la contre-rampe 15, d'augmenter la distance axiale entre le plateau de pression 3 et la zone d'appui du diaphragme 9 sur lesdits organes 12, 16, ce qui permet de compenser progressivement l'usure des garnitures 30 du disque de friction 31 et/ou l'usure des contre-matériaux des plateaux de pression 3 et de réaction.

Le dispositif permet également de conserver l'angle de fonctionnement du diaphragme 9, de manière à maintenir un effort de précharge constant et réduire les contraintes mécaniques.

On notera que l'un des organes de rattrapage 12 ou de détection 16 peut être soumis à une accélération tangentielle due par exemple à un acyclisme non maîtrisé du moteur thermique ou à un choc dans la transmission de couple. Dans un tel cas, les bras 21 et les surfaces de butée 23c, 23d empêchent un déplacement angulaire trop important de l'un des organes 12, 16 par rapport à l'autre.

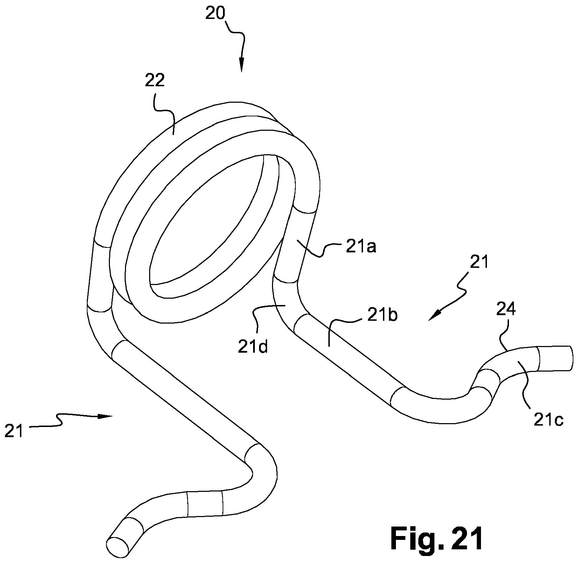

La figure 21 illustre une deuxième forme de réalisation de l'invention, se distinguant de celle exposée précédemment en ce que les portions proximales 21a des bras 21 s'étendant sensiblement parallèlement l'une par rapport à l'autre. Le fonctionnement général d'une telle forme de réalisation est similaire à celui décrit précédemment.

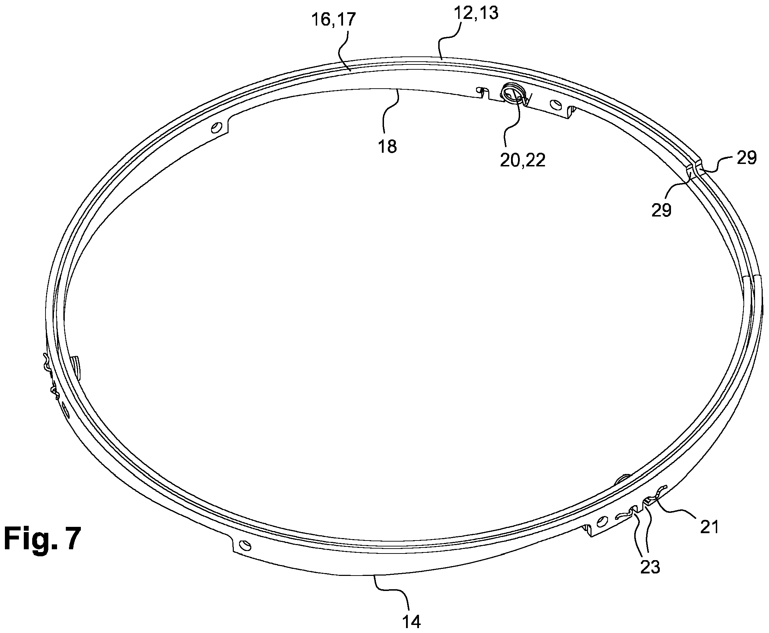

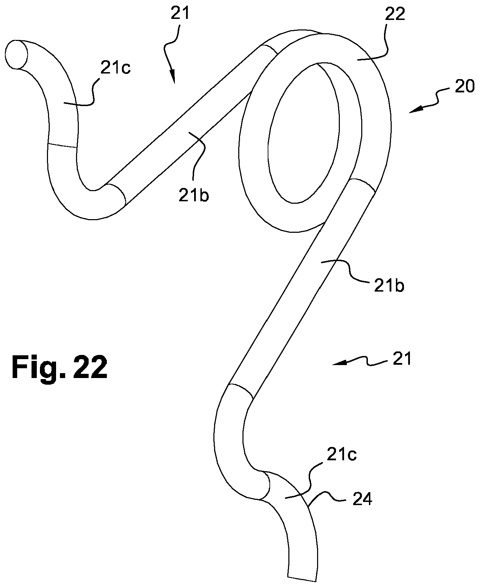

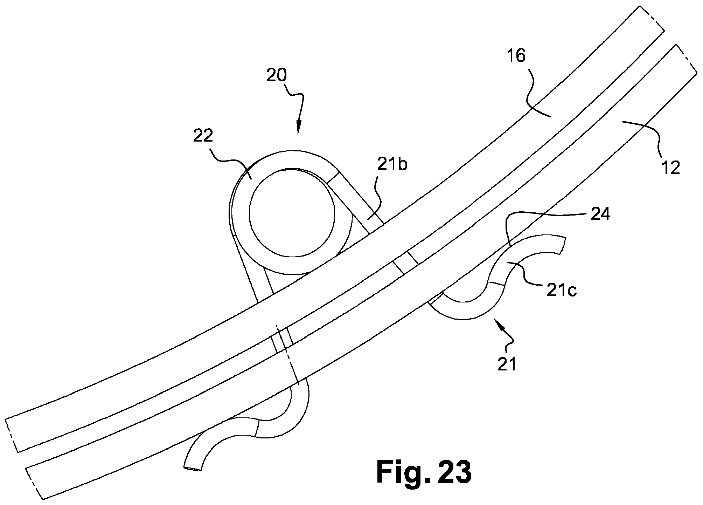

Les figures 22 et 23 représentent une troisième forme de réalisation, se distinguant de celle exposée en référence aux figures 1 à 19 en ce que l'un au moins des seconds organes élastiques 20, de préférence chaque second organe élastique 20 comporte au moins une spire 22, ici 1,5 spire, s'étendant globalement dans un plan radial et tendant à écarter les bras 21 l'un de l'autre.

Les bras 21 comportent chacun une partie 21b s'étendant dans un plan radial, reliée à l'une des extrémités des spires 22 et dans le prolongement de ladite extrémité, et une partie distale 21c en forme de S. Les parties 21b des deux bras 21 sont obliques l'une par rapport à l'autre et s'écartent l'une de l'autre en direction de la partie distale. Les parties distales 21c s'étendent dans un plan globalement radial depuis les parties 21b, à l'opposé l'une de l'autre. Chaque partie distale 21c présente une forme générale en S.

Comme précédemment, après montage dans les lumières 23, les spires 22 des seconds organes élastiques 20 prennent appui sur l'organe de détection 16 et les parties distales 21c prennent appui sur l'organe de rattrapage 12, au niveau des zones 24, de manière à assurer le maintien en position et le centrage des deux organes 12, 16.

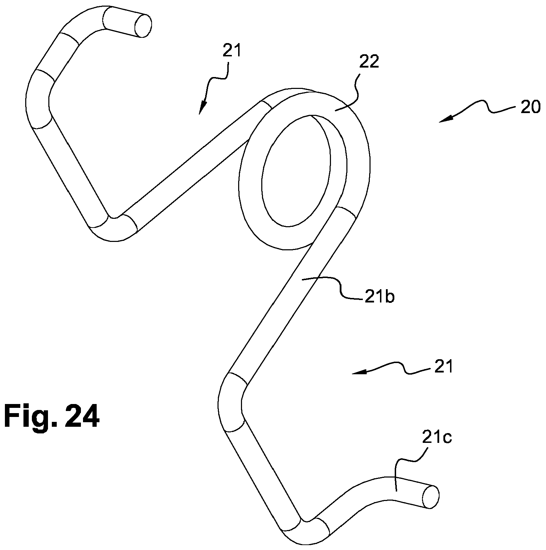

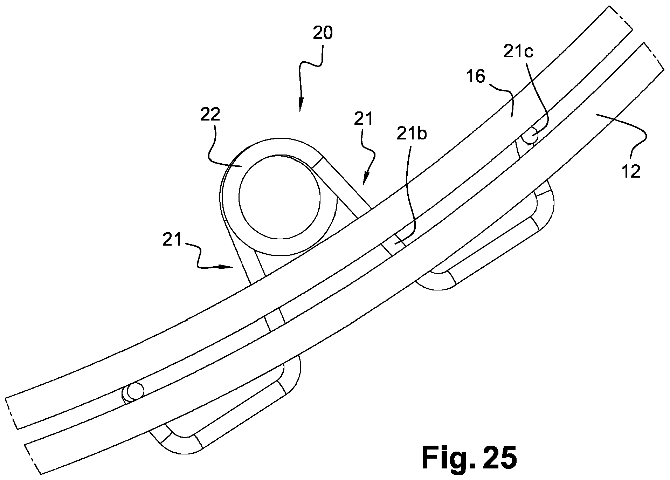

Les figures 24 et 25 représentent une quatrième forme de réalisation, se distinguant de celle exposée en référence aux figures 22 et 23 en ce que les bras 21 comportent chacun une forme générale en U dont l'extrémité distale 21c est recourbée afin de s'étendre axialement.

Ainsi, après montage des seconds organes élastiques 20, les spires 22 prennent appui sur la surface interne de l'organe de détection 16 et les extrémités distales 21c forment des entretoises logées dans l'espace radial annulaire ménagé entre l'organe de détection 16 et l'organe de rattrapage 12. Plus particulièrement, les organes 20 exercent un effort radial de pincement tendant à plaquer les extrémités distales 21c des bras 21 contre la surface radialement externe de l'organe de détection 16.

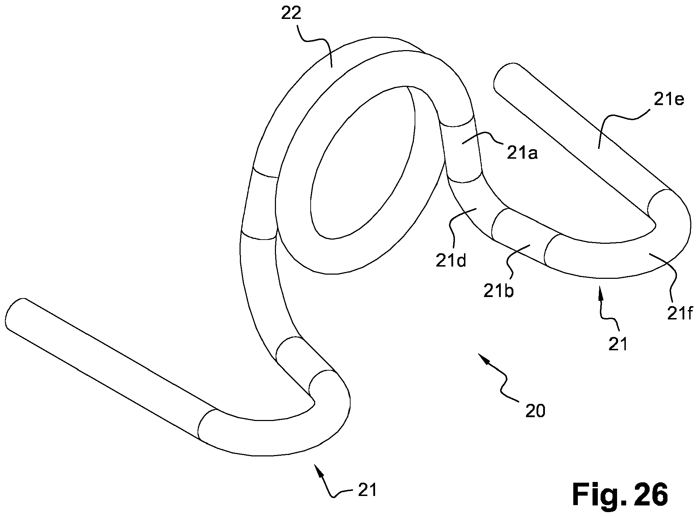

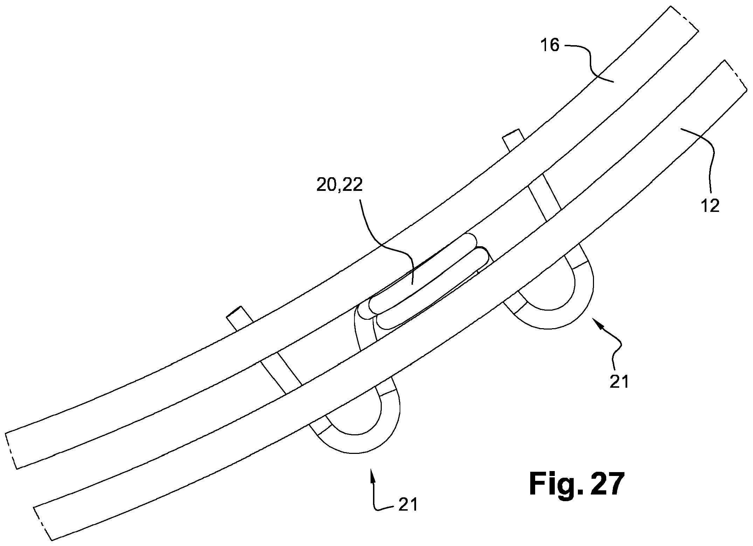

Les figures 26 et 27 représentent une cinquième forme de réalisation, se distinguant de celles exposées précédemment en ce que l'un au moins des seconds organes élastiques 20, de préférence chaque second organe élastique 20 comporte au moins une spire 22, ici 1,5 spire, s'étendant globalement dans un plan axial et tendant à écarter les bras 21 l'un de l'autre.

Les bras 21 comportent chacun une partie 21a s'étendant dans un plan axial, reliée par une zone courbe 21d à une partie 21b s'étendant radialement vers l'extérieur depuis la partie 21d, et une partie 21e s'étendant radialement vers l'intérieur et reliée à la partie 21b par une zone courbe 21f. Les parties 21e sont situées latéralement à l'extérieur des parties 21b. Les deux parties 21b, 21e sont parallèles l'une par rapport à l'autre ou forment un angle entre elles.

Les parties 21b, 21e sont engagées dans les lumières 23 de l'organe de rattrapage 12 et de l'organe de détection 16, la ou les spires 22 étant intercalées radialement entre lesdits organes 12, 16.

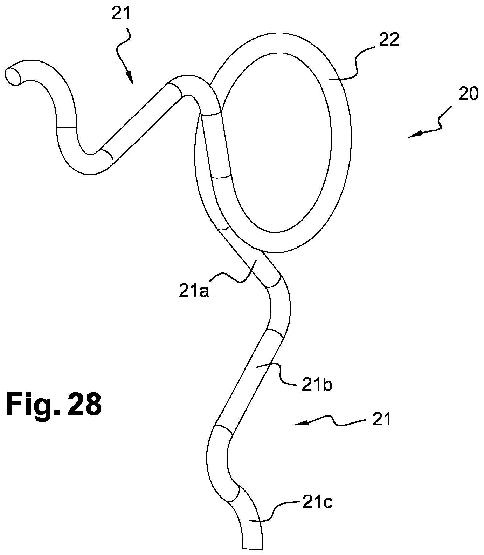

La figure 28 représente une sixième forme de réalisation dans laquelle l'un au moins des seconds organes élastiques 20, de préférence chaque second organe élastique 20 comporte au moins une spire 22, ici une seule spire 22, s'étendant globalement dans un plan radial et tendant à écarter les bras l'un de l'autre.

Les bras 21 comportent chacun une partie proximale 21a s'étendant dans un plan radial, reliée à l'une des extrémités de la spire 22 et dans le prolongement de ladite extrémité, une partie médiane 21b globalement perpendiculaire à la partie proximale 21a, et une partie distale 21c en forme de S. Les parties proximales 21a des deux bras s'étendent latéralement à l'opposé l'une de l'autre de part et d'autre de la spire. Il en est de même pour les parties distales 21c. Par ailleurs, les parties 21b s'étendent sensiblement parallèlement l'une par rapport à l'autre. Dans cette forme de réalisation, la spire 22 est située à l'opposé des parties distales 21c des bras, par rapport aux parties proximales 21b.

Comme précédemment, après montage dans les lumières 23, les spires 22 des seconds organes élastiques 20 prennent appui sur l'organe de détection 16 et les parties distales 21c prennent appui sur l'organe de rattrapage 12, de manière à assurer le maintien en position et le centrage des deux organes 12, 16. Les parties 21b sont destinées à être engagées dans les lumières 23 desdits organes 12, 16.

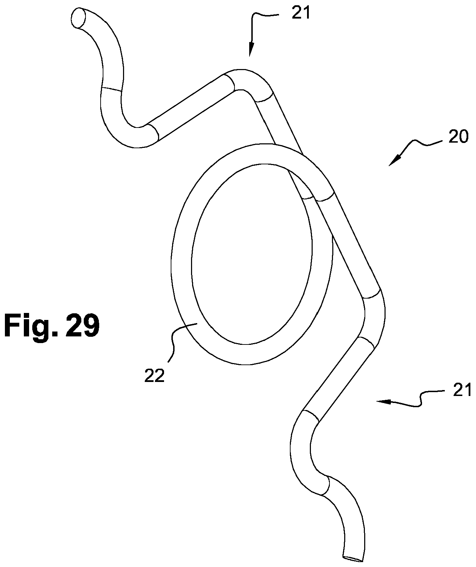

La figure 29 représente une septième forme de réalisation, qui diffère de celle exposée à la figure 28 en ce que la spire 22 est située entre les parties médianes 21b des bras 21. Des découpes permettant le logement de la spire 22 doivent donc être prévues en conséquence dans les organes 12, 16 afin de permettre le montage d'un tel organe élastique 20.

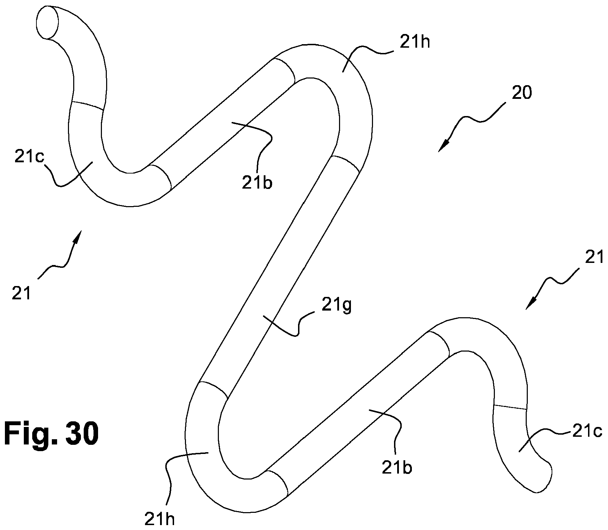

La figure 30 représente une huitième forme de réalisation dans laquelle l'un au moins des seconds organes élastique 20 est dépourvu de spire mais comporte des moyens élastiques se présentant sous la forme d'un S et comportant une partie centrale oblique 21g, reliées à deux parties médianes 21 b des bras 21 par deux zones recourbées 21h. Les parties 21b des bras sont parallèles l'une par rapport à l'autre et sont aptes à se déplacer élastiquement en translation l'une par rapport à l'autre. Comme précédemment, de tels moyens élastiques tendent à écarter les bras 21 l'un de l'autre.

Des parties distales 21c en forme de S s'étendent latéralement depuis les parties 21b, à l'opposé l'une de l'autre. Dans cette forme de réalisation, les parties distales 21c sont décalées radialement l'une de l'autre. En effet, lors du montage d'un tel organe élastique, l'une des parties distales 21c est destinée à venir en appui sur la face radialement interne de l'organe de détection 16, tandis que l'autre partie distale 21c est destinée à venir en appui sur la face radialement externe de l'organe de rattrapage 12. Les deux parties distales 21c exercent ainsi élastiquement un effort radial de pincement entre les deux organes 12, 16. Lors d'un tel montage également, les parties 21b sont engagées dans des lumières 23 desdits organes, des découpes étant également prévues dans les organes 12, 16 pour le logement de la partie 21g.

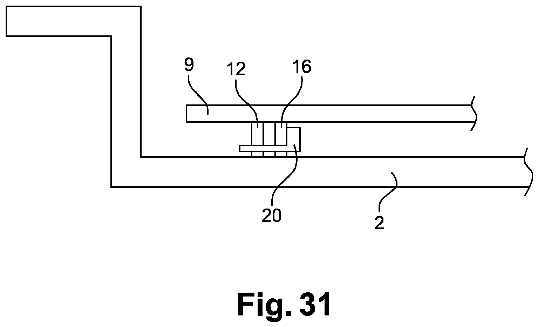

La figure 31 représente une neuvième forme de réalisation de l'invention dans lequel le sous-ensemble comportant notamment l'organe de détection 12, l'organe de verrouillage 16 et les seconds organes élastiques 20 est monté, non pas entre le diaphragme 9 et le plateau de pression 3 comme précédemment, mais entre le diaphragme 9 et le couvercle 2. Le fonctionnement d'un tel dispositif est similaire à celui décrit précédemment.

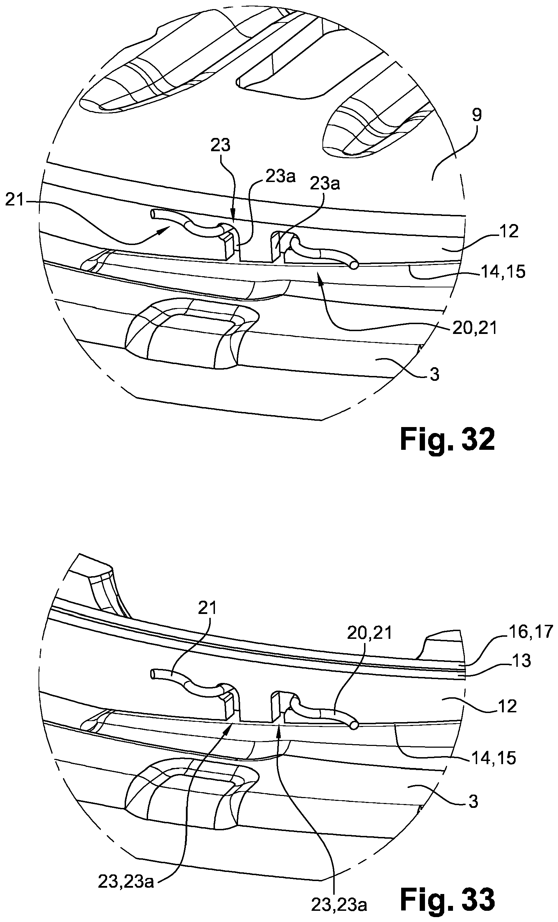

Les figures 32 et 33 représentent une dixième forme de réalisation de l'invention, qui diffère de celle exposée en référence aux figures 1 à 13 en ce que chaque lumière 23 comporte une portion d'introduction 23a débouchant au niveau de l'extrémité de l'organe correspondant 12, 16 qui est tournée en direction du plateau de pression 3, en regard de la contre-rampe 15. Les bras 21 des organes élastiques 20 sont ainsi enfermés dans les lumières 23, la surface de la contre-rampe 15 venant refermer les extrémités débouchantes des portions d'introduction 23a.

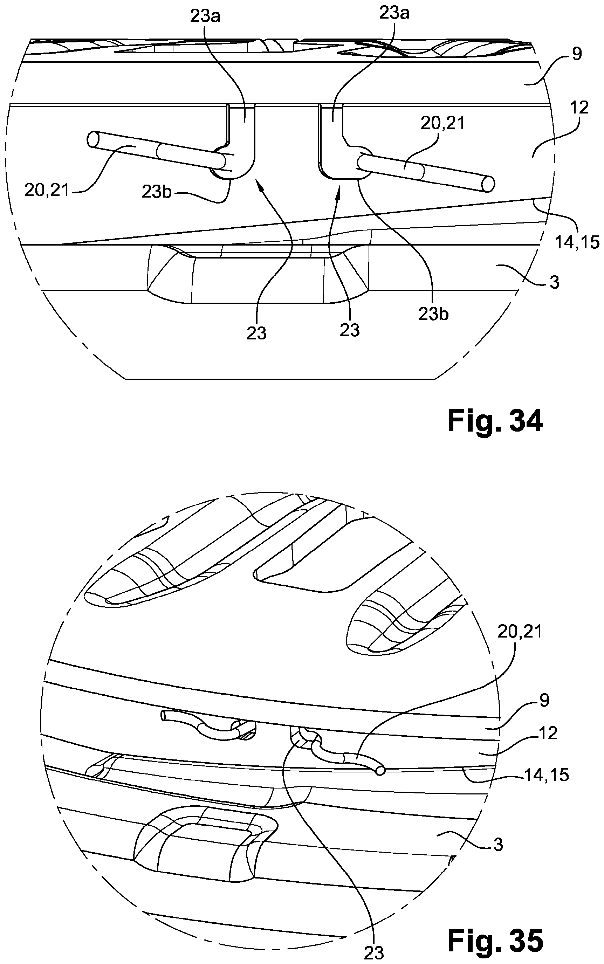

Les figures 34 et 35 représentent une onzième forme de réalisation de l'invention, qui diffère de celle exposée en référence aux figures 1 à 13 en ce que chaque lumière 23 comporte une portion d'introduction 23a débouchant au niveau de l'extrémité 13, 17 de l'organe correspondant 12, 16 qui est tournée en direction du diaphragme 9. Les bras 21 des organes élastiques 20 sont ainsi enfermés dans les lumières 23, la surface du diaphragme 9 venant refermer les extrémités débouchantes des portions d'introduction 23a.

## Revendications

1. Mécanisme de rattrapage d'usure pour un dispositif d'embrayage, notamment pour véhicule automobile, comportant un organe de rattrapage d'usure (12) comprenant une première rampe (14) destinée à coopérer avec une première contre-rampe (15), un organe de détection d'usure (16) comprenant une seconde rampe (18) destinée à coopérer avec une seconde contre-rampe (15), l'organe de rattrapage d'usure (12) étant mobile par rapport à l'organe de détection (16), **caractérisé en ce qu'**il comporte des moyens de centrage (20) de l'organe de rattrapage d'usure (12) par rapport à l'organe de détection d'usure (16), montés sur l'organe de rattrapage d'usure (12) et/ou sur l'organe de détection (16), et mobiles avec l'organe (12, 16) sur lequel les moyens de centrage (20) sont montés.

2. Mécanisme de rattrapage d'usure selon la revendication 1, **caractérisé en ce que** les moyens de centrage (20) comportent une première partie d'appui (22) venant en appui sur l'organe de détection (16), respectivement sur l'organe de rattrapage (12), et une seconde partie (21c) d'appui venant en appui sur l'organe de rattrapage (12), respectivement sur l'organe de détection (16), les moyens de centrage (20) tendant à rapprocher élastiquement les première et seconde parties d'appui (22, 21c) de façon à pincer l'organe de rattrapage d'usure (12) et l'organe de détection (16) entre lesdites parties (22, 21c).

3. Mécanisme de rattrapage d'usure selon la revendication 1 ou 2, **caractérisé en ce que** les moyens de centrage (20) comportent une partie d'entretoisement (22, 21c) intercalée entre l'organe de rattrapage (12) et l'organe de détection (16).

4. Mécanisme de rattrapage d'usure selon l'une des revendications 1 à 3, **caractérisé en ce que** les moyens de centrage comportent au moins un organe élastique (20) monté entre l'organe de rattrapage (12) et l'organe de détection d'usure (16).

5. Mécanisme de rattrapage d'usure selon la revendication 4, **caractérisé en ce que** l'organe de rattrapage (12) et l'organe de détection (16) sont annulaires et concentriques, les moyens de centrage comportant au moins trois organes élastiques (20) répartis sur la circonférence desdits organes.

6. Mécanisme de rattrapage d'usure selon la revendication 5, **caractérisé en ce que** les organes élastiques (20) sont régulièrement répartis sur la circonférence de l'organe de rattrapage (12) et de l'organe de détection (16).

7. Mécanisme de rattrapage d'usure selon l'une des revendications 4 à 6, **caractérisé en ce que** l'organe élastique (20) comporte au moins deux bras (21) reliés l'un à l'autre par des moyens élastiques (22) tendant à écarter les deux bras (21) l'un par rapport à l'autre, chaque bras (21) étant apte à coopérer avec l'organe de rattrapage d'usure (12) et/ou l'organe de détection (16) de manière à déplacer l'organe de rattrapage d'usure (12) par rapport à l'organe de détection (16), par rapprochement et écartement successifs des deux bras (21).

8. Mécanisme de rattrapage d'usure selon la revendication 7, **caractérisé en ce que** les moyens élastiques (22) sont conçus pour déplacer les deux bras l'un par rapport à l'autre par translation, dans la direction d'écartement ou de rapprochement des bras (21).

9. Mécanisme de rattrapage d'usure selon la revendication 7 ou 8, **caractérisé en ce que** les moyens élastiques comportent une portion courbe (21h) ou au moins une spire (22).

10. Mécanisme de rattrapage d'usure selon la revendication 9, **caractérisé en ce que** l'organe de rattrapage d'usure (12) et l'organe de détection (16) sont annulaires ou en forme d'arc de cercle, et concentriques, lesdits organes (12, 16) étant aptes à pivoter l'un par rapport à l'autre autour d'un axe de pivotement, la portion courbe (21h) ou la spire (22) des moyens élastiques s'étendant dans un plan radial ou dans un plan axial par rapport à l'axe de pivotement.

11. Mécanisme de rattrapage d'usure selon la revendication 2 et selon l'une des revendications 9 ou 10, caractérisé la portion courbe ou la spire (22) des moyens élastiques est apte à prendre appui radialement sur l'organe de détection (16), respectivement sur l'organe de rattrapage d'usure (12), l'extrémité libre (21c) de l'un au moins des bras (21) étant apte à prendre appui élastiquement et radialement sur l'organe de rattrapage d'usure (12), respectivement sur l'organe de détection (16), de façon à pincer et rapprocher radialement l'organe de rattrapage d'usure (12) et l'organe de détection (16).

12. Mécanisme de rattrapage d'usure selon la revendication 3 et selon l'une des revendications 9 ou 10, **caractérisé en ce que** la portion courbe (21h), la spire (22) ou l'un au moins des bras (21) est intercalé radialement entre l'organe de rattrapage de jeu (12) et l'organe de détection (16).

13. Mécanisme de rattrapage d'usure selon l'une des revendications 7 à 12, **caractérisé en ce que** chaque bras (21) est engagé dans une lumière (23) de l'organe de détection (16) et dans une lumière (23) de l'organe rattrapage d'usure (12), chaque lumière (23) comportant une portion d'introduction (23a) s'étendant perpendiculairement à la direction d'écartement des deux bras (21) et débouchant au niveau d'une extrémité axiale de l'organe correspondant (12, 16), et une portion de butée (23b) s'étendant dans la direction d'écartement des deux bras (21), chaque bras (21) étant apte à venir en appui sur au moins une extrémité (23c, 23d) de la portion de butée (23b) de la lumière (23) de l'organe de rattrapage d'usure (12) et/ou de la lumière (23) de l'organe de détection (16).

14. Dispositif d'embrayage, notamment pour véhicule automobile, comportant un plateau de pression (3) destiné à venir en appui sur un disque de friction (31) du dispositif d'embrayage, un diaphragme (9) servant à l'actionnement du plateau de pression (3) entre une position totalement embrayée dans laquelle ledit plateau de pression (3) est poussé contre le disque de friction, et une position totalement débrayée dans laquelle ledit plateau de pression (3) est écarté du disque de friction par l'intermédiaire de moyens (7) de rappel du plateau de pression (3), **caractérisé en ce qu'**il comporte un mécanisme de rattrapage d'usure selon l'une des revendications 1 à 13, ledit mécanisme comportant
des moyens de rattrapage de l'usure du disque de friction, intercalés entre le diaphragme (9) et le plateau de pression (3), lesdits moyens de rattrapage d'usure comportant l'organe de rattrapage (12), mobile dans une plage déterminée et comportant une rampe (14) coopérant avec une contre-rampe (15) tournée du côté du plateau de pression (3), de façon à ajuster la distance entre le diaphragme (9) et le plateau de pression (3) et compenser l'usure du disque de friction en fonction de la position de la rampe (14) par rapport à la contre-rampe (15),
des moyens de détection de l'usure aptes à autoriser le déplacement dudit organe mobile (12) des moyens de rattrapage d'usure en cas d'usure du disque de friction et aptes à empêcher un tel déplacement lorsque cette usure n'est pas suffisante, lesdits moyens de détection comportant l'organe de détection (16), mobile dans une plage déterminée par rapport à l'organe de rattrapage mobile (12), et comportant une rampe (18) coopérant avec une contre-rampe (15) tournée du côté du plateau de pression (3),
au moins un organe presseur (25) venant contraindre au moins la rampe (18) de l'organe de détection (16) contre la contre-rampe (15) associée, l'organe presseur (25) étant apte à coopérer avec une butée fixe (28) de manière à libérer lesdits organes mobiles (12, 16) lorsqu'une usure du disque de friction est détectée,
l'organe de rattrapage mobile (12) étant sollicité de façon à se déplacer lorsque ledit organe de rattrapage mobile (12) est libéré par le diaphragme (9),
l'organe de détection mobile (16) étant sollicité de façon à se déplacer et à rattraper, au moins en partie, le jeu (j1) entre celui-ci et l'organe presseur (25), lorsque ledit organe de détection mobile (16) est libéré par l'organe presseur (25) et par le diaphragme (9).

15. Double embrayage, **caractérisé en ce qu'**il comporte au moins un dispositif d'embrayage selon la revendication 14.

## Patentansprüche

1. Verschleißnachstellmechanismus für eine Kupplungsvorrichtung, insbesondere für ein Kraftfahrzeug, der ein Verschleißnachstellelement (12) aufweist, das eine erste Rampe (14) enthält, die dazu bestimmt ist, mit einer ersten Gegenrampe (15) zusammenzuwirken, wobei ein Verschleißerfassungselement (16) eine zweite Rampe (18) enthält, die dazu bestimmt ist, mit einer zweite Gegenrampe (15) zusammenzuwirken, wobei das Verschleißnachstellelement (12) bezüglich des Erfassungselements (16) beweglich ist, **dadurch gekennzeichnet, dass** er Zentriereinrichtungen (20) des Verschleißnachstellelements (12) bezüglich des Verschleißerfassungselements (16) aufweist, die auf das Verschleißnachstellelement (12) und/oder auf das Erfassungselement (16) montiert und mit dem Element (12, 16) beweglich sind, auf das die Zentriereinrichtungen (20) montiert sind.

2. Verschleißnachstellmechanismus nach Anspruch 1, **dadurch gekennzeichnet, dass** die Zentriereinrichtungen (20) einen ersten Auflageteil (22), der sich auf das Erfassungselement (16) bzw. das Nachstellelement (12) auflegt, und einen zweiten Auflageteil (21c) aufweisen, der sich auf das Nachstellelement (12) bzw. das Erfassungselement (16) auflegt, wobei die Zentriereinrichtungen (20) darauf abzielen, die ersten und zweiten Auflageteile (22, 21c) einander elastisch anzunähern, um das Verschleißnachstellelement (12) und das Erfassungselement (16) zwischen den Teilen (22, 21c) einzuklemmen.

3. Verschleißnachstellmechanismus nach Anspruch 1 oder 2, **dadurch gekennzeichnet, dass** die Zentriereinrichtungen (20) einen Abstandshalterteil (22, 21c) aufweisen, der zwischen das Nachstellelement (12) und das Erfassungselement (16) eingefügt ist.

4. Verschleißnachstellmechanismus nach einem der Ansprüche 1 bis 3, **dadurch gekennzeichnet, dass** die Zentriereinrichtungen mindestens ein elastisches Element (20) aufweisen, das zwischen das Nachstellelement (12) und das Verschleißerfassungselement (16) montiert ist.

5. Verschleißnachstellmechanismus nach Anspruch 4, **dadurch gekennzeichnet, dass** das Nachstellelement (12) und das Erfassungselement (16) ringförmig und konzentrisch sind, wobei die Zentriereinrichtungen mindestens drei elastische Elemente (20) aufweisen, die auf dem Umfang der Elemente verteilt sind.

6. Verschleißnachstellmechanismus nach Anspruch 5, **dadurch gekennzeichnet, dass** die elastischen Elemente (20) gleichmäßig auf dem Umfang des Nachstellelements (12) und des Erfassungselements (16) verteilt sind.

7. Verschleißnachstellmechanismus nach einem der Ansprüche 4 bis 6, **dadurch gekennzeichnet, dass** das elastische Element (20) mindestens zwei Arme (21) aufweist, die durch elastische Einrichtungen (22) miteinander verbunden sind, die darauf abzielen, die zwei Arme (21) voneinander zu entfernen, wobei jeder Arm (21) mit dem Verschleißnachstellelement (12) und/oder dem Erfassungselement (16) so zusammenwirken kann, dass das Verschleißnachstellelement (12) bezüglich des Erfassungselements (16) durch aufeinanderfolgendes Annähern und Entfernen der zwei Arme (21) verschoben wird.

8. Verschleißnachstellmechanismus nach Anspruch 7, **dadurch gekennzeichnet, dass** die elastischen Einrichtungen (22) konzipiert sind, um die zwei Arme durch Translationsverschiebung in der Richtung des Entfernens voneinander oder Annäherns der Arme (21) zueinander zu verschieben.

9. Verschleißnachstellmechanismus nach Anspruch 7 oder 8, **dadurch gekennzeichnet, dass** die elastischen Einrichtungen einen gekrümmten Abschnitt (21h) oder mindestens eine Windung (22) aufweisen.

10. Verschleißnachstellmechanismus nach Anspruch 9, **dadurch gekennzeichnet, dass** das Verschleißnachstellelement (12) und das Erfassungselement (16) ringförmig oder kreisbogenförmig und konzentrisch sind, wobei die Elemente (12, 16) um eine Schwenkachse zueinander schwenken können, wobei der gekrümmte Abschnitt (21h) oder die Windung (22) der elastischen Einrichtungen sich in einer radialen Ebene oder in einer axialen Ebene bezüglich der Schwenkachse erstrecken.

11. Verschleißnachstellmechanismus nach Anspruch 2 und nach einem der Ansprüche 9 oder 10, **dadurch gekennzeichnet, dass** der gekrümmte Abschnitt oder die Windung (22) der elastischen Einrichtungen sich radial auf das Erfassungselement (16) bzw. auf das Verschleißnachstellelement (12) auflegen kann, wobei das freie Ende (21c) mindestens eines der Arme (21) sich elastisch und radial auf das Verschleißnachstellelement (12) bzw. auf das Erfassungselement (16) auflegen kann, um das Verschleißnachstellelement (12) und das Erfassungselement (16) einzuklemmen und radial anzunähern.

12. Verschleißnachstellmechanismus nach Anspruch 3 und nach einem der Ansprüche 9 oder 10, **dadurch gekennzeichnet, dass** der gekrümmte Abschnitt (21h), die Windung (22) oder mindestens einer der Arme (21) radial zwischen das Spielnachstellelement (12) und das Erfassungselement (16) eingefügt ist.

13. Verschleißnachstellmechanismus nach einem der Ansprüche 7 bis 12, **dadurch gekennzeichnet, dass** jeder Arm (21) in ein Schlitzloch (23) des Erfassungselements (16) und in ein Schlitzloch (23) des Verschleißnachstellelements (12) eingeführt ist, wobei jedes Schlitzloch (23) einen Einführabschnitt (23a), der sich lotrecht zur Entfernungsrichtung der zwei Arme (21) erstreckt und im Bereich eines axialen Endes des entsprechenden Elements (12, 16) mündet, und einen Anschlagabschnitt (23b) aufweist, der sich in der Entfernungsrichtung der zwei Arme (21) erstreckt, wobei jeder Arm (21) sich auf mindestens ein Ende (23c, 23d) des Anschlagabschnitts (23b) des Schlitzlochs (23) des Verschleißnachstellelements (12) und/oder des Schlitzlochs (23) des Erfassungselements (16) auflegen kann.

14. Kupplungsvorrichtung, insbesondere für ein Kraftfahrzeug, die eine Druckplatte (3) aufweist, die dazu bestimmt ist, sich auf eine Reibscheibe (31) der Kupplungsvorrichtung aufzulegen, wobei eine Membran (9) zur Betätigung der Druckplatte (3) zwischen einer völlig eingekuppelten Stellung, in der die Druckplatte (3) gegen die Reibscheibe gedrückt wird, und einer völlig ausgekuppelten Stellung dient, in der die Druckplatte (3) mittels Rückstelleinrichtungen (7) der Druckplatte (3) von der Reibscheibe entfernt ist, **dadurch gekennzeichnet, dass** sie einen Verschleißnachstellmechanismus nach einem der Ansprüche 1 bis 13 aufweist, wobei der Mechanismus aufweist
Nachstelleinrichtungen des Verschleißes der Reibscheibe, die zwischen die Membran (9) und die Druckplatte (3) eingeschoben sind, wobei die Verschleißnachstelleinrichtungen das Nachstellelement (12) aufweisen, das in einem bestimmten Bereich beweglich ist und eine Rampe (14) aufweist, die mit einer Gegenrampe (15) zusammenwirkt, die zur Seite der Druckplatte (3) weist, um den Abstand zwischen der Membran (9) und der Druckplatte (3) einzustellen und den Verschleiß der Reibscheibe abhängig von der Stellung der Rampe (14) bezüglich der Gegenrampe (15) zu kompensieren,
Erfassungseinrichtungen des Verschleißes, die die Verschiebung des beweglichen Elements (12) der Verschleißnachstelleinrichtungen im Fall des Verschleißes der Reibscheibe erlauben und eine solche Verschiebung verhindern können, wenn dieser Verschleiß nicht ausreichend ist, wobei die Erfassungseinrichtungen das Erfassungselement (16), das in einem bestimmten Bereich bezüglich des beweglichen Nachstellelements (12) beweglich ist, und eine Rampe (18) aufweisen, die mit einer Gegenrampe (15) zusammenwirkt, die zur Seite der Druckplatte (3) weist,
mindestens ein Druckelement (25), das mindestens die Rampe (18) des Erfassungselements (16) gegen die zugeordnete Gegenrampe (15) zwingt, wobei das Druckelement (25) mit einem ortsfesten Anschlag (28) zusammenwirken kann, um die beweglichen Elemente (12, 16) freizugeben, wenn ein Verschleiß der Reibscheibe erfasst wird,
wobei das bewegliche Nachstellelement (12) so beaufschlagt wird, dass es sich verschiebt, wenn das bewegliche Nachstellelement (12) von der Membran (9) freigegeben wird,
wobei das bewegliche Erfassungselement (16) so beaufschlagt wird, dass es sich verschiebt und zumindest zum Teil das Spiel (j1) zwischen diesem und dem Druckelement (25) nachstellt, wenn das bewegliche Erfassungselement (16) vom Druckelement (25) und von der Membran (9) freigegeben wird.

15. Doppelkupplung, **dadurch gekennzeichnet, dass** sie mindestens eine Kupplungsvorrichtung nach Anspruch 14 aufweist.

## Claims

1. A wear compensation mechanism for a clutch device, notably for a motor vehicle, comprising a wear compensation member (12) comprising a first ramp (14) that is intended to cooperate with a first mating ramp (15), a wear detection member (16) comprising a second ramp (18) that is intended to cooperate with a second mating ramp (15), the wear compensation member (12) being able to move with respect to the detection member (16), **characterized in that** it comprises means (20) for centering the wear compensation member (12) with respect to the wear detection member (16), said means (20) being mounted on the wear compensation member (12) and/or on the detection member (16) and being able to move with the member (12, 16) on which the centering means (20) are mounted.

2. The wear compensation mechanism as claimed in claim 1, **characterized in that** the centering means (20) comprise a first pressing part (22) that presses against the detection member (16) or against the compensation member (12), respectively, and a second pressing part (21c) that presses against the compensation member (12) or against the detection member (16), respectively, the centering means (20) tending to move the first and second pressing parts (22, 21c) elastically together so as to pinch the wear compensation member (12) and the detection member (16) between said parts (22, 21c).

3. The wear compensation mechanism as claimed in claim 1 or 2, **characterized in that** the centering means (20) comprise a spacer part (22, 21c) interposed between the compensation member (12) and the detection member (16).

4. The wear compensation mechanism as claimed in one of claims 1 to 3, **characterized in that** the centering means comprise at least one elastic member (20) mounted between the compensation member (12) and the wear detection member (16).

5. The wear compensation mechanism as claimed in claim 4, **characterized in that** the compensation member (12) and the detection member (16) are annular and concentric, the centering means comprising at least three elastic members (20) distributed around the circumference of said members.

6. The wear compensation mechanism as claimed in claim 5, **characterized in that** the elastic members (20) are distributed regularly around the circumference of the compensation member (21) and of the detection member (16).

7. The wear compensation mechanism as claimed in one of claims 4 to 6, **characterized in that** the elastic member (20) comprises at least two arms (21) that are connected together by elastic means (22) that tend to move the two arms (21) away from one another, each arm (21) being able to cooperate with the wear compensation member (12) and/or the detection member (16) so as to move the wear compensation member (12) with respect to the detection member (16), by successively moving the two arms (21) together and apart.

8. The wear compensation mechanism as claimed in claim 7, **characterized in that** the elastic means (22) are designed to move the two arms in translation with respect to one another, in the direction in which the arms (21) are moved apart or together.

9. The wear compensation mechanism as claimed in claim 7 or 8, **characterized in that** the elastic means comprise a curved portion (21h) or at least one coil (22).

10. The wear compensation mechanism as claimed in claim 9, **characterized in that** the wear compensation member (12) and the detection member (16) are annular or in the form of an arc of a circle, and concentric, said members (12, 16) being able to pivot with respect to one another about a pivot axis, the curved portion (21h) or the coil (22) of the elastic means extending in a radial plane or in an axial plane with respect to the pivot axis.

11. The wear compensation mechanism as claimed in claim 2 and as claimed in one of claims 9 and 10, **characterized in that** the curved portion or the coil (22) of the elastic means is able to press radially against the detection member (16) or against the wear compensation member (12), respectively, the free end (21c) of at least one of the arms (21) being able to bear elastically and radially against the wear compensation member (12) or against the detection member (16), respectively, so as to pinch and move the wear compensation member (12) and the detection member (16) radially together.

12. The wear compensation mechanism as claimed in claim 3 and as claimed in one of claims 9 and 10, **characterized in that** the curved portion (21h), the coil (22) or at least one of the arms (21) is interposed radially between the play compensation member (12) and the detection member (16).

13. The wear compensation mechanism as claimed in one of claims 7 to 12, **characterized in that** each arm (21) is fitted in a slot (23) in the detection member (16) and in a slot (23) in the wear compensation member (12), each slot (23) having an introduction portion (23a) that extends perpendicularly to the direction in which the two arms (21) are moved apart and opens out at an axial end of the corresponding member (12, 16), and an end-stop portion (23b) that extends in the direction in which the two arms (21) are moved apart, each arm (21) being able to press against at least one end (23c, 23d) of the end-stop portion (23b) of the slot (23) in the wear compensation member (12) and/or of the slot (23) in the detection member (16).

14. A clutch device, notably for a motor vehicle, comprising a pressure plate (3) intended to press against a friction disk (31) of the clutch device, a diaphragm (9) used for causing the pressure plate (3) to move between a fully-engaged position in which said pressure plate (3) is pushed against the friction disk and a fully-released position in which said pressure plate (3) is kept apart from the friction disk by way of pressure plate (3) return means (7), **characterized in that** it comprises a wear compensation mechanism as claimed in one of claims 1 to 13, said mechanism comprising
means for compensating for friction disk wear that are interposed between the diaphragm (9) and the pressure plate (3), said wear compensation means comprising the compensation member (12) that is able to move in a determined range and comprises a ramp (14) cooperating with a mating ramp (15) facing toward the pressure plate (3), so as to adjust the distance between the diaphragm (9) and the pressure plate (3) and compensate for friction disk wear depending on the position of the ramp (14) with respect to the mating ramp (15),
wear detection means that are able to allow said mobile member (12) of the wear compensation means to move in the event of friction disk wear and are able to prevent such a movement when this wear is not sufficient, said detection means comprising the detection member (16) that is able to move, in a determined range, with respect to the mobile compensation member (12) and comprises a ramp (18) cooperating with a mating ramp (15) facing toward the pressure plate (3),
at least one pressing member (25) that forces at least the ramp (18) of the detection member (16) against the associated mating ramp (15), the pressing member (25) being able to cooperate with a fixed end stop (28) so as to free said mobile members (12, 16) when friction disk wear is detected,
the mobile compensation member (12) being urged to move when said mobile compensation member (12) is freed by the diaphragm (9),
the mobile detection member (16) being urged to move and to compensate, at least in part, for the play (j1) between it and the pressing member (25) when said mobile detection member (16) is freed by the pressing member (25) and by the diaphragm (9).

15. A dual clutch, **characterized in that** it comprises at least one clutch device as claimed in claim 14.
